# EUROPEAN PATENT SPECIFICATION

(11) **EP 4 498 329 B1**
(45) Date of publication and mention of the grant of the patent: **28.10.2026**
(21) Application number: 23290030.8
(22) Date of filing: 28.07.2023
(51) Int. Cl.: G06V 10/25, G06V 20/40, G06V 20/58

(54) **DRIVING ACTION RECOMMENDATION AND COLLISION WARNING DEVICE**
FAHRHANDLUNGSEMPFEHLUNGS- UND KOLLISIONSWARNVORRICHTUNG
DISPOSITIF DE RECOMMANDATION D'ACTION DE CONDUITE ET D'AVERTISSEMENT DE COLLISION

(43) Date of publication of application: 29.01.2025
(73) Proprietor: Hitachi, Ltd., Tokyo 100-8280 (JP)
(72) Inventor: Hoang, Trung, 06560 Valbonne (FR); Ohazulike, Anthony, 06560 Valbonne (FR)
(74) Representative: MERH-IP Matias Erny Reichl Hoffmann Patentanwälte PartG mbB

(56) References cited:
- US-A1- 2019 092 235
- US-B1- 11 628 855

## Description

The present disclosure relates to a collision warning device, and a corresponding method and computer program product.

### Background

In current advanced driver assistance systems (ADAS) radar sensors are often used to determine a distance between a host vehicle and a preceding vehicle in order to provide an emergency brake assist for avoiding collisions. Such forward obstruction warning systems usually detect vehicles or obstacles in front of a host vehicle by using a millimetre-wave radar. A corresponding system calculates the distance to an object in front of the host vehicle, and if there is a risk of collision, sounds an alarm, displays a visual alert or even commences an emergency brake manoeuvre to avoid a collision. These conventional systems furthermore often utilize a so-called range of interest in order to determine and track objects or vehicles that may collide with the host vehicle. Conventionally, the determination of an area of interest is based on determining two-dimensional areas in two-dimensional imagery. Boundary calculation of range of interest is normally performed without using it as input to a machine learning process. In prior art two-dimensional front view imagery is often used in the image processing pipeline to highlight detected and tracked vehicles or obstacles. However newer approaches tend to utilize bird-eye-imagery for the detecting and tracking objects in the surroundings of the host vehicle.

US 2019092235 A1 discloses a vehicle driving assistance method which comprises receiving an image of surroundings of a vehicle; receiving driving information of the vehicle; adjusting a region of interest in the image based on the driving information; detecting an object; determining a probability of collision between the object and the vehicle; and outputting a signal based on the probability of collision.

US 11 628 855 B1 discloses an object velocity detection from multi-modal sensor data. It describes a method comprising: receiving sensor data associated with a first time, the sensor data comprising point cloud data and image data representing a portion of an environment surrounding an autonomous vehicle; receiving an object detection associated with the first time, wherein the object detection identifies an object in the image data; determining, based at least in part on the object detection, a first subset of the sensor data comprising a portion of the image data and a portion of the point cloud data; inputting the first subset of the sensor data into a machine-learned (ML) model; receiving, from the ML model, an output; determining, based at least in part on the output, a velocity associated with the object; determining, based at least in part on at least one of the output or the velocity, a predicted location of the object at a second time after the first time; receiving ground truth data indicative of a three-dimensional ROI associated with the object and the second time; determining a difference between the predicted location and a center of the three-dimensional ROI; altering one or more parameters of the ML model based at least in part on the difference; and transmitting the ML model to a vehicle to control motion of the vehicle.

### Problem

When implementing, e.g., a forward collision warning system based on, e.g., bird-eye-images in which a combination of the bird-eye-view and for example a HD-Map are fed directly into modelling wherein algorithms are used to predict future positions of a host vehicle relative to other vehicles or surrounding objects, a number of problems arises.

Firstly, as the number of detected and tracked objects increases, a comparably high amount of processing power becomes necessary in order to store and process all the objects.

Secondly, an increased number of detected objects also comprises a certain number of objects which are not relevant for the issuing of a collision warning at a current or future traffic situation.

Correspondingly, tracking those irrelevant objects represent an inefficient use of processing power.

Furthermore, processing a large number of objects detected and predicting their trajectory is usually demanding and consumes large amounts of processing power.

On the other hand, in a normal traffic situation there are many objects irrelevant for a final prediction of a potential collision.

Therefore, there is a need for a driving action recommendation and collision warning device that is able to reduce the processing load necessary to predict the trajectory of other road users and preferably also to facilitate more efficient training of a machine learning model for the prediction of driver actions in response to real-life traffic environment.

### Solution

In view of the above problem, it is an object of the subject-matter set forth in the appended claims to provide a respectively improved driving action recommendation and collision warning device. In particular, the present disclosure helps in ensuring that the device, e.g., collision warning/avoidance device, focuses only on relevant areas, and thus increasing the efficiency and accuracy of the model instead of processing all information received by the sensor.

According to a first aspect of the subject-matter described herein, there is proposed a driving action recommendation and/or collision warning device (which may also be called "collision warning device" for brevity) which is mounted on or implemented in a vehicle which comprises a first onboard sensor configured to receive images of an area in the vicinity of the vehicle from an image sensor and to detect obstacles in the received images; a second onboard sensor which is configured to acquire structured data and/or unstructured data; an onboard computing unit which is configured to generate an image by converting the images received from an image sensor Into a schematic representation comprising the obstacles detected by the first onboard sensor and an area of Interest decision unit which is configured to extract an area of interest from the image generated by the computing unit, wherefor the structured and/or unstructured data is used preferably. Furthermore, the collision warning device comprises a driver action prediction unit which is configured to predict a possible future event based on the extracted area of interest and a driver action prediction model and an action recommendation unit which is configured to output a driving action recommendation and/or a warning to/for a driver of the vehicle and/or a person in the vicinity of the vehicle when a specific event is predicted.

A vehicle in the sense of this disclosure may be a vehicle which participates in traffic involving pedestrians, motorists and cyclist in an environment with varying traffic volume. Preferably the vehicle may be a vehicle of public transportation and even more preferably it may be a tram or bus. The vehicle may also be referred to as host or ego vehicle as it is intended to be Installed with the collision warning device according to the present subject-matter.

The above-described sensors are devices that are capable of collecting internal and/or external data of the vehicle. In particular, the first onboard sensor may preferably be an image processor receiving digital images or data from a camera, a LIDAR-device or a radar. More specifically, the first onboard sensor may preferably be connected to a set of stereo cameras or a mono camera. In view of the fact, that LiDAR-devices are costly and require high processing power for image processing, especially stereo cameras can offer comparably low cost of installation and are able to detect and track objects in front of the vehicle in an efficient and reliable manner. The above described image processor (or a computing device internal or external to the vehicle may do so) may be configured to detect obstacles or objects in front of the host vehicle by assigning bounding boxes to those obstacles or objects appearing the field of view of the LIDAR device or camera. The bounding boxes may be assigned with a three-dimensional position of the bounding box center, a three-dimensional orientation of the bounding box center and three-dimensional size data defining a distance of the bounding box boundaries to its center.

The process of object detection may be carried out based on known algorithms that work to identify and locate objects within an image or video. Specifically, object detection draws bounding boxes around these detected objects, which allow to locate where said objects are in (or how they move through) a given scene.

The term obstacle is preferably to be understood as any conceivable form of road user which has a movement pattern or may develop a movement pattern which at some point may intersect with the vehicle. Specifically, the term obstacle may comprise road users such as cars, pedestrians, cyclists, motorists and cyclists. Furthermore, the terms object, detected object and tracked object may be used as synonyms for the term obstacle. Even further, obstacles may also relate to static objects.

The camera or LiDAR device may preferably be mounted on the front of the host vehicle in a position where it can observe the environment in front of the vehicle without being easily obstructed. Moreover, the first sensor may be mounted at a position of the vehicle that allows for a good angle of observation in order to facilitate reliable detection and tracking of objects in front of the vehicle. Also, the camera or LiDAR may be mounted at any point of the host vehicle which allows capturing the vicinity of the host vehicle.

It is noted that even though the examples herein mainly apply the scenario of forward looking/sensing, the present disclosure is not limited thereto. The disclosure also covers that the vehicle can sense backward, sideward, 360° or any other variation. Also the area of interest may not necessarily point forward in relation to the vehicle's position. Additionally or alternatively, the area of interest may also be 360° around the vehicle, sidewards, backwards, and/or the like.

The second onboard sensor may preferably be a multifunction vehicle bus configured to collect and transmit operational data of the vehicle or of other relevant information, such as velocity, driver command inputs, high-definition map data and position data from a global positioning system (GPS), etc.

In addition to that, the vehicle may preferably be equipped with a computing unit which is configured to process data and information of several lines of data sources both internal and external. The computing unit may preferably be mounted on the host vehicle and configured to directly communicate with the host vehicles systems such as the first onboard sensor and the second onboard sensor. On the other hand, the computing unit may also be provided as an external device such as a server which communicates with the host vehicles systems via remote communication.

The computing unit may perform tasks such as the processing of unstructured data which may be also referred to as perception data output by the first onboard sensor including digital images of the area in front (or other areas) of the host vehicle in order to generate bounding boxes representing detected objects within the digital images. Additionally, the computing unit may also be a processing module for the generation of structured data based on data acquired from a multifunction vehicle bus and/or internal vehicle data and GPS data and hazard estimation data such as distance to collision and time to collision. Most preferably, the computing unit may perform a conversion of the images received from an image sensor into Images with a bird-eye-perspective showing the area in the vicinity of the host vehicle in a top-view. A detailed explanation of the data processing performed by the computing unit is given below.

The area of interest decision unit may be part of an onboard computing unit of the host vehicle or may be a dedicated processing unit that is installed in the host vehicle or it may be provided as an external device such as a server which communicates with the host vehicles systems via remote communication.

Furthermore, the area of interest decision unit may most preferably be a processing unit for further processing structured and unstructured data generated by the computing unit based on the output of the first and second onboard sensors.

The term area of interest is preferably to be understood as a computer-processed part of the images received from an image sensor incorporated in the camera or LIDAR device. More specifically, the area of interest may be a computer-generated layer which is embedded into the images of an area in the vicinity of the host vehicle. Preferably, the area in the vicinity of the vehicle lies in front of the host/ego vehicle (or in any other direction than the front) and covers an area which may correspond to the field of view of a human driver of the host vehicle. The area of interest on the other hand only covers a part of the images captured by the image sensor and is intended to reduce the images to an area which contains features that may be relevant for a human driver In making their decisions for driving the host vehicle. Most preferably, the area of interest Is extracted from bird-eye-view images that have been generated by the computing unit. Therefore, the area of interest is preferably a top-view representation of parts of the bird-eye-view images generated by the computing unit.

The area of interest can be adapted in predetermined time steps to accommodate for changes In the vehicle environment and can be adapted according to a diverse set of hyperparameters as well as internal host vehicle data and perception data. With respect to the present subject matter, a dedicated algorithm for the determination of the area of interest may be employed which may either be a rule-based algorithm or a trained machine learning unit/algorithm or a combination of both. The algorithm Is designed to identify infrastructure features in, e.g., bird-eye-view images generated by the computing unit based on parameters that will be described later.

The area of interest may change according to predetermined time steps or events. The use of an adaptable area of interest is advantageous in simulating the behavior of a human driver. For instance, at varying vehicle velocities, the field of view of a human driver varies according to the speed of the vehicle. For example, at lower speeds a human driver will focus on an area that lies approximately 5m in front of the vehicle. At higher speeds, the field of view of a human driver might extend to 30m to 60m in front of the vehicle. Therefore, the area of interest that has been adapted according to the above exemplary principle facilitates the removal of objects irrelevant for the prediction of possible future events. With regard to the present subject-matter the term irrelevant is used for objects or obstacles detected by the first onboard sensor which will would not affect a human driver of the host vehicle in making their decisions for controlling the host vehicle. Correspondingly, the algorithm used in the determination of the area of interest causes the removal of irrelevant vehicles, pedestrians and objects in order to mimic the selective perception of a human driver
The term structured data is preferably to be understood as data that is a standardized format, has a well-defined structure, complies to a data model, follows a persistent order, and/or is easily accessed by humans and programs, This data type is generally stored In a database. With regard to the subject-matter described herein, the term structured data may relate to speed, acceleration, deceleration and other driving conditions picked up by the multifunction vehicle bus (MVB) of the host vehicle. Also, the structured data may comprise GPS-position data of the host vehicle and possibly other road users, high-definition map material providing information such as traffic lanes, traffic lights, distances of features relevant to traffic flow. Also, most preferably, the structured data may furthermore comprise data extracted from unstructured data like time to collision with another road user and/or distance to collision with another road user calculated by the computing unit.

On the other hand, the term unstructured data which may also be referred to as perception data is preferably to be understood as data that stems from digital optical imagery which contains raw images of an area in the vicinity of the host vehicle collected by the first onboard sensor and also data that has been processed by the first onboard sensor in order to identify and detect objects in the received digital imagery. Furthermore, the term unstructured data may also refer to images taken from digital maps or digital high-definition maps in which the infrastructure used by the host vehicle is shown in, for example, photorealistic or schematic representation. Also, unstructured data may be digital images of external cameras surveying the infrastructure which is used by the vehicle.

The term driver action is preferably to be understood as any kind of measure or input to control the vehicle conducted by the driver of the host vehicle. This includes for instance, driving the vehicle in a normal operational environment, reactions of the driver in response to changes of the environment of the vehicle and especially measures or inputs to avoid collisions with other road users. Driver actions may include causing the host vehicle to accelerate, decelerate or turn as well as causing the host vehicle to emit visual or acoustic signals to other road users.

The term possible future event is preferably to be understood as a driver action, driver input or driver control command carried out by the driver of the host vehicle in response to a traffic situation occurring in the vicinity of the host vehicle. This includes for instance, a driver action which leads to the acceleration, deceleration or turning of the host vehicle or the use of signaling devices such as Indicators or headlights. Moreover, a possible future event may also be the sounding of the horn or bell of the host vehicle in order to acoustically warn other road users to avoid a collision. Traffic situations in the vicinity of the host vehicle may for instance include the trajectories or expected trajectories of other road users, the trajectory of the host vehicle, intersecting trajectories of other road users and the host vehicle, traffic light signals or other features of infrastructure that affect the trajectories of other road users and/or the trajectory of the host vehicle.

The driver action prediction model may be preferably a machine learning model that is trained by a set of past/previously taken images based on previously extracted areas of interest. More specifically, the employed action prediction model may be designed according to state-of-the-art predictive behavior modelling. Most preferably, it may be an algorithmic model which is trained based on historical data to predict future behavior. For example, such a model may consider past actions of the driver of a host vehicle in order to predict how and when they will perform actions to control the host vehicle in the future.

A warning may most preferably be any acoustic or visual signal emanating from the host vehicle in order to warn other road users of the presence of the host vehicle. Said warning may be carried out in the form of sounding a horn, ringing a bell or using light signals such as indicators or headlights of the host vehicle. The warnings may be most preferably carried out when a collision of another road user and the host vehicle is immanent. Further, the driving action recommendation may include advice to the driver of the vehicle which may include output in visual and/or audio form and for example include recommended actions, such as "slow down", "accelerate", "break", "turn", etc.

The term predefined event is preferably to be understood as an event in which the driver of the host vehicle does not carry out a driver action, driver input or driver control command that has been predicted by the driver action prediction unit. More specifically, in the sense of the present subject-matter, a predefined event may be a situation in which the driver of the host vehicle does not react to a traffic situation in the vicinity of the host vehicle in an appropriate manner. For instance, this may comprise a situation in which the driver of the host vehicle is predicted to trigger an acoustic or visual warning in order to warn another road user about a collision. Should the driver of the host vehicle however fail to give the warning, the action recommendation unit may output a warning or recommended action to the driver or a person/road user in the vicinity of the host vehicle after a certain time-frame has elapsed. The time frame may preferably a time span in which a warning would still be duly timed to avoid a collision. For example, after a time span of 2 to 3 seconds after the driver action prediction unit predicted the driver of the host vehicle to cause a warning signal to another road user, the action recommendation unit will output a warning to the driver or a person/road user in the vicinity of the host vehicle with which a collision is immanent.

Moreover, the action recommendation unit may also output a control input or automated control command which, for instance, may cause the host vehicle to decelerate if neither the driver of the host vehicle, nor the other road user with which a collision is immanent should respond to the output warning signal. This may also happen after a predetermined time-span after the warning and/or recommended action has been output. Preferably the time span after the control command is output is shorter than the time-span that has to elapse until the warning is output.

The above-described subject-matter offers the technical advantage of increased reliability of the warnings and/or recommended action that can be issued to a driver of the host vehicle or a road user in the vicinity of the host vehicle because the area of interest which provides the basis for the training of the machine learning algorithm for driver action prediction can be adapted to various traffic scenarios in order to dispose of data which is irrelevant for the prediction of driver actions, In other words, as the volume of unstructured data that has to be considered in the training of the machine learning algorithm for driver action prediction and during the actual employment can be reduced, the computational burden on the driver action prediction unit can be reduced. This is achieved, for example, because not all objects that have been detected in front or in the general vicinity of the host vehicle are tracked. This is, in particular, achieved by the (real-time) adaption of the area of interest.

Furthermore, because the training of the driver action prediction model is conducted by using a set of past images based on previously extracted areas of Interest a more accurate prediction of the trajectories of other road users can be achieved. This also helps to facilitate a more reliable driver action prediction and therefore reduce the issuing of premature or unnecessary warnings which could lead to a confusion or stress of the driver.

Summarizing, the above-described collision warning device is able to predict driver actions and to issue a warning and/or recommended action if a certain driver input does not happen in response to a specific event during a predetermined/safe period of time. Moreover, driver actions may also be conducted by an automated system configured to override the actual driver actions in order to avoid a collision with another road user if the driver should not react to the warning issued by the collision warning device according to the disclosed subject-matter.

According to a preferred aspect of the subject-matter disclosed herein, the second onboard sensor may be configured to store, inter alia, traffic information and/or map information, and the area of interest decision unit may be further configured to change the area of interest based on the traffic information and/or the map information.

The term traffic information is preferably to be understood as information regarding traffic volume, possible obstacles in the path of the vehicle that may be the result of unforeseen events. Traffic information may be acquired by the vehicle via the first onboard sensor or it may be transmitted to the vehicle from external sources such as GPS-based real-time traffic data or footage of external cameras surveying the infrastructure which is used by the vehicle. Further, the term map information can include all kinds of data relating to maps, such as map images, coordinates of map features, such as buildings, streets, etc., map details, such as building heights, building ground area, street parameters, etc.

This offers the advantage that the environment of the vehicle can be determined with higher accuracy, the area of Interest can be adapted to a variety of traffic and map scenarios which helps to offer more reliable driver action prediction and the area of interest can be adapted to discern between relevant and irrelevant objects for driver action prediction. Furthermore, the area of interest can be adapted to infrastructure such as crossings, crossroads, traffic lights and traffic lanes which helps even more to filter out irrelevant features.

For example, if the vehicle approaches a crossing or a junction, such as a T-junction, or a round-about, the area of interest may be adapted, in a rule-based algorithm of the area of interest decision unit, based on a chain of information, such as: firstly, the traffic congestion status is obtained by the vehicle's sensors and if the traffic is heavy, i.e. many other vehicles, pedestrians, or others are in the vicinity, the area of interest is increased in size, e.g. by a predefined percentage, predefined increased length of the outer edges and/or the like. The shape of the area of interest may be 2-D and preferably rectangular, round, elliptic and/or the like and also the shape may be adapted by the area of interest decision unit. Secondly, the speed of the other traffic participants may be used as a further criterion and the speed may be obtained/estimated based on traffic rules, such as speed limits, and the type of the traffic participants. Then, if the other vehicles or traffic participants are considered/estimated to be rather fast (e.g. cars on a highway), the area of interest may be increased, and otherwise decreased. Further, if the above decision steps are taken subsequently, the first step may lead to an increased area of interest (due to high traffic) and the second step may then lead to an even larger or reduced area of interest depending on the speed. Further, thirdly, if the vehicle has priority according to traffic rules, traffic signs detected by the vehicle, maps or the like, the area of interest may be changed as well. E.g., if the vehicle approaches a round-about and has no priority for entering, the area of interest may be enlarged and the shape may be set so that the round-about is covered by the area of interest fully or greatly while, if the vehicle has priority, the area of interest may only be set to cover the relevant vicinity to safely enter the round-about, crossing, junction or the like.

Further, for example in case the host/ego vehicle is a tram, a lane which does not cross the tram lines is not relevant in the determination of the area of interest and said lane may therefore be excluded from the area of interest. However a road crossing with traffic coming from two different directions intersecting the path of the host vehicle may be an area relevant for the determination of the area of interest, as potential collisions may occur in this area.

According to another preferred aspect of the subject-matter disclosed herein, the second onboard sensor may be configured to store a history of driver inputs and the area of interest decision unit may be further configured to change the area of interest based on the history of driver inputs.

This is especially beneficial in order to more reliably conduct a prediction of the driver actions or inputs. The system can learn from a human driver which reactions are usually taken in response of a specific situation. When a certain specific situation evokes the same safe driver action/reaction

in a number of cases it becomes certain to assume that a human driver will take the same actions as already demonstrated.

According to another aspect of the subject-matter disclosed herein, the image generated by the computing unit may be a bird-eye-view image schematically representing the environment (such as forward, backward, 360° and/or the like) of the vehicle in a top-view.

Bird-eye-images can be generated by known software or other known means/algorithms to achieve a certain amount of accuracy on a tracked objects position relative to the host vehicle. The bird-eye-view can be generated from images acquired by digital image sensors. For example, a LiDAR-device may be used to acquire digital images capturing the area in the vicinity of the host vehicle. However, this requires high amounts of processing power and is comparably expensive because it requires the installation of a LiDAR-module. On the other hand, bird-eye-view images can also be created by using mono cameras or stereo cameras in order to track and detect objects or obstacles efficiently.

A bird-eye-view representation of the environment of the host vehicle is especially beneficial in comparison to a front view representation of the surroundings and obstacles in front of the vehicle. In other words, the overlap of detected objects in a vertically-oriented two-dimensional representation of the environment In front of the vehicle may cause problems in the determination of an expediently designed area of interest. However, since a bird-eye-view representation of the area in the vicinity of the host vehicle is a horizontally-oriented two-dimensional representation, areas or obstacles that may be occluded in a front view representation can be depicted with increased spatial accuracy. Also, due to the lack of occlusion the area of interest can take more complex shapes in order to represent the spatial distribution of relevant infrastructure features and detected obstacles. In addition to that, a clearer representation of the trajectories of other road users can be achieved in bird-eye-view images.

In even other words, the area of interest can take more shapes than only a two-dimensional frame or multiple two-dimensional frames situated in a vertically-oriented two-dimensional representation of the area in the vicinity of the host vehicle, because spatial depth is added to the perception data. Therefore, the area of interest becomes far more adaptive as it may be represented by for example a cross shape which includes a cross road by also sparing the area in front and behind the cross road in a lateral direction. This would not be possible in a front view representation because it includes all what lies behind the window which is subtended by it.

According to another aspect of the subject-matter disclosed herein, the area of interest decision unit may be further configured to extract the area of Interest from the bird-eye-view image generated by the computing unit.

As previously described, a machine learning and/or dedicated rule-based algorithm/computer program may be used to extract the area of interest form the bird-eye-images generated by the computing unit. Preferably, the algorithm for the determination of the area of interest may consider parameters, as also discussed in some examples above, such as velocity of the host vehicle and of other vehicles or dynamic objects in the scene, GPS-position of the host vehicle, Internal structured data provided by the multifunction vehicle bus and infrastructure features such as drivable lanes and traffic lights extracted from digital high-definition map material. For example, the algorithm may decide to increase the area of interest for high travelling velocity and to reduce it for lower velocities, where lower or higher may be defined by predefined ranges of velocities and which may be related to certain lengths or area sizes of the area of interest. Further, the algorithm may consider the landscape, vicinity or map information and decide to fit the area of interest to a driving lane, a street, an area of a crossing in front of the vehicle or the like. Further, aspects may be included into this algorithm as mentioned before.

Additionally or alternatively, the setting of the area of interest may also be performed by a trained artificial intelligence or machine learning unit which have been trained by previously taken images and bird-eye-view representations. In other words, the area of interest decision unit may be a rule-based computer program/algorithm run on a computer or a computing unit and/or it may be or include a trained artificial intelligence or machine learning unit.

This aspect offers the advantage that, e.g., in combination with the previously described advantages of a bird-eye-view representation of the surroundings of the host vehicle a highly adaptable and precise determination of the area of interest can be achieved, This is especially beneficial in the determination of relevant objects and the prediction of their trajectories in relation to the host vehicle. Moreover, the shape and/or size of the area of interest can be additionally refined. This helps to reduce the processing load because the number of objects to be tracked can be further reduced.

According to another preferred aspect of the subject matter disclosed herein, the area of interest decision unit may further be configured to filter objects tracked and detected by the first onboard sensor that are located within the area of interest according to the principles of intersection over union.

The filtering of detected objects according to the principles of intersection over union or a Jaccard index helps to further refine the area of interest by filtering potential obstacles, for example, vehicles or pedestrians from the area of Interest. This way, conditions can be established under which objects, or their square-format representations, which are also referred to as bounding boxes, respectively, that do not sufficiently intersect with the area of interest can be filtered out. In other words, by adding more refinement to the process of filtering out irrelevant objects from the area of interest the computational burden on the driver action prediction unit can be further reduced. Additionally or alternatively, the filtering may also be performed by a trained artificial intelligence or machine learning unit which have been trained by previously taken images and bird-eye-view representations and human-based input according to which objects shall be filtered and which not during the training. In other words, the area of interest decision unit may be a rule-based computer program/algorithm run on a computer or a computing unit and/or it may be or include a trained artificial intelligence or machine learning unit and it may perform the processes of adapting the area of interest, the filtering and the like.

According to another preferred aspect of the subject-matter disclosed herein, the area of interest decision unit may be further configured to adapt the area of interest to the speed of the host vehicle and/or of other dynamic objects or vehicles in the scene.

This aspect provides another refinement in the determination of the area of interest, as some examples described above demonstrate, because it takes human adaption of field of view in correspondence with the velocity of the host vehicle into account. Typically, a human driver would shift their attention to areas more distant in front of the vehicle once they have decided that the speed of the host vehicle could be increased in accordance with the traffic situation directly in front of the host vehicle. Accordingly, as the host vehicle will cover more ground per time interval the driver will pay more attention to the areas that lie beyond the stopping distance of the host vehicle, Vice versa, distant areas in front of the host vehicle will receive less attention from the driver at low speeds because nearer areas are now in the focus of their attention. Therefore, the aspect of speed adaption is helpful in reproducing the adaptation of the field of view in order to mimic a human driver and their speed-dependent perception of traffic situations and to be able to predict the actions of a human driver.

According to another preferred aspect of the subject-matter disclosed herein, the area of interest decision unit may be further configured to track objects that have not been filtered out from the area of interest and to perform a process of position prediction for said objects.

The term tracking objects is preferably to be understood as an application of deep learning where an algorithm takes an initial set of detected objects and establishes a unique identification for each of the Initially detected objects and then tracks the detected objects as the move within the frames of a time series of images captured by an Image sensor. Otherwise, a classical physics-based approach may be used as well. With regard to the present subject-matter a known state-of-the-art algorithm may be used to perform the task of automatically identifying objects in a time series of images and interpreting them as a set of trajectories. As described for the detection process, an indication such as a bounding box around the object to be tracked may be used to represent the objects size, direction and center.

The process of position prediction is preferably to be understood as a computer implemented process in which the future positions of tracked objects which are part of the area of interest are predicted based on their previous positions and their current trajectories. The prediction of the trajectories may preferably performed by a state-of-the-art algorithm deemed appropriate by a person skilled in the art. The current trajectories of the tracked objects may be determined by referring to the perception data output by computing unit. In other words, a succession of positions of the objects detected by the first onboard sensor may be taken from a time series of images representing the area in the vicinity of the host vehicle. In addition to the detection process carried out by the first onboard sensor positions or even trajectories of other road users may be provided by external sources such as real-time traffic datasets or information of external sensors. Most preferably, the process of position prediction is carried out by a dedicated algorithm which algorithm to choose will be apparent to the person skilled in the art. Alternatively or additionally, the process may be performed by a trained artificial intelligence or machine learning unit which have been trained by previously taken images and bird-eye-view representations and human-based Input according to which objects are the same during the tracking.

According to another preferred aspect of the subject-matter disclosed herein, the objects tracked by the area of interest decision unit that are located within the area of interest are selected based on an overlap threshold of their intersection over union.

In other words, the setting of said threshold facilitates the possibility to fine tune requirements under which a detected object will be included in the area of interest for tracking and position prediction. Therefore, the processing load of obstacle tracking can be adjusted according to the availability of processing capacities and moreover clearly defined presets on how to deal with objects located at the boundaries of the area of interest can be implemented. The threshold can be set by a human operator or can be set automatically by the area of interest decision unit.

According to another preferred aspect of the subject-matter disclosed herein, the objects tracked by the area of Interest decision unit that are located within the area of interest are used as input data for the driver action prediction model.

Positions, movements and trajectories of objects within in the area of interest are an important part in the prediction of driver actions or driver control commands. Based on this Information it is possible to predict the actions carried out by a human driver when, for instance, a collision with another road user is immanent and the driver is taking respective measures to avoid it or to warn said road user by giving a warning signal such as an acoustic signal. Velocities and positions determined during the tracking of objects located within the area of interest can hence be used to predict the actions of the driver. As this process is also based on the velocity and trajectory of the host vehicle accurate predictions can be achieved.

According to another preferred aspect of the subject-matter disclosed herein, the driver action prediction model may be a machine learning model which has been trained by the output of the process of position prediction, the shape and position of the area of interest and previous commands of the driver of the vehicle.

This aspect offers the advantage that the machine learning algorithm for driver action prediction can be trained with actions and control commands previously carried out by a human driver of the host vehicle and therefore becomes more reliable in the prediction of the behavior of the driver in response to road users in front of the host vehicle. This leads to improved and more appropriate warning signals. By implementing an according feedback loop the training of the machine learning algorithm can be sped up and optimized.

By using the shape and position of the area of interest that has been determined by the algorithm dedicated to the determination of the area of interest, the training of the driver action prediction model can be improved in order to better mimic the behavior of a human driver. As previously described, the position and shape of the area of interest can be adapted to model the changes in the perception of a human driver in accordance with changing driving situations.

According to another preferred aspect of the subject-matter disclosed herein, the output of the driver action prediction model may be used as an input in the determination of the area of interest.

This aspect helps to refine the determination of the area of interest because with enhanced driver action prediction the algorithm for the determination of the area of interest may be optimized. For example, driver action prediction may predict a response to an object which was not included In the area of Interest but the driver noticed it and reacted to it. Furthermore, a set of hyperparameters that have been initially determined for the determination of the area of interest can be optimized to achieve even more expedient and accurate results with regard to the size and shape of the area of interest.

According to another preferred aspect of the subject-matter disclosed herein, there is proposed a system which consists of the above-described collision warning device and a vehicle according to the above description.

Also, there is proposed a method for outputting a warning and/or driving action recommendation to a driver of a vehicle, including the corresponding actions/steps performed by the device/system as described in connection with the above aspects and modifications.

Also, computer program product is proposed which is configured to carry out said method when executed on a computer.

According to the above aspects, there is proposed an Implementation of an advanced collision warning and/or driving action system which is preferably based on machine learning. The proposed solution can be used exclusively based on camera imagery or a combination of camera and lidar imagery, which offers increased flexibility. In particular, an algorithm is proposed which leverages an Area of Interest (AOI) in order to filter objects irrelevant to detection and tracking to reduce processing power needed and at the same time improve the accuracy of warnings put out to the operator of a vehicle. The different aspects and preferred aspects may be combined with each other,

Summarizing, a solution is provided which offers technical benefits especially with regard to limit data processing load while at the same time mimic the behavior of a human driver and especially the features of the surroundings of the' vehicle to which a human driver would pay attention to in order to avoid collisions or safety-relevant situations. This adds distribution of attention an experienced driver would do and also accounts for soft human factors such as intuition that may help to avoid a collision.

In the following the claimed subject matter will be further explained based on at least one preferential example with reference to the attached drawings, wherein:
- Figure 1: shows a schematic depiction of the general setup of a collision warning device for a vehicle.
- Figure 2: shows a detailed overview over the process of data processing performed by the onboard computing unit.
- Figures 3A and 3B: show an exemplary table of structured features collected by the second onboard sensor.
- Figure 4: shows an exemplary table of unstructured data that has been converted to structured data.
- Figure 5: shows a more detailed overview over the process of AOI-determination performed by the area of interest decision unit.
- Figure 6A: shows an example of a bird eye view image that has been created by the onboard computing unit 30 based on unstructured data received from the first onboard sensor.
- Figures 6B to 6E: show examples of areas of interest with different shapes and sizes that have been determined by the area of interest determination unit, and
- Figures 6F to 6K: show examples of differently adapted areas of interest depending on traffic information and map Information.
- Figure 7: shows a more detailed overview over the process of driver action prediction performed by the driver action prediction unit.
- Figure 8: shows a more detailed overview over the process of Issuing a warning by the action recommendation unit.
- Figure 9: shows is a schematic overview over the internal processes and interactions of the respective subunits of the above-described collision warning device for a vehicle.
- Figure 10: shows three exemplary types of driver behavior modelling.
- Figure 11: shows as exemplary process of validation, testing and deployment.
- Figure 12: shows a schematic overview in which conventional processing a modelling of driver action prediction is compared with the processing and modelling carried out according to the present subject-matter.
- Figure 13: shows an exemplary overview over the data processing steps that lead to the deployment of the driver action prediction model in a real traffic environment.

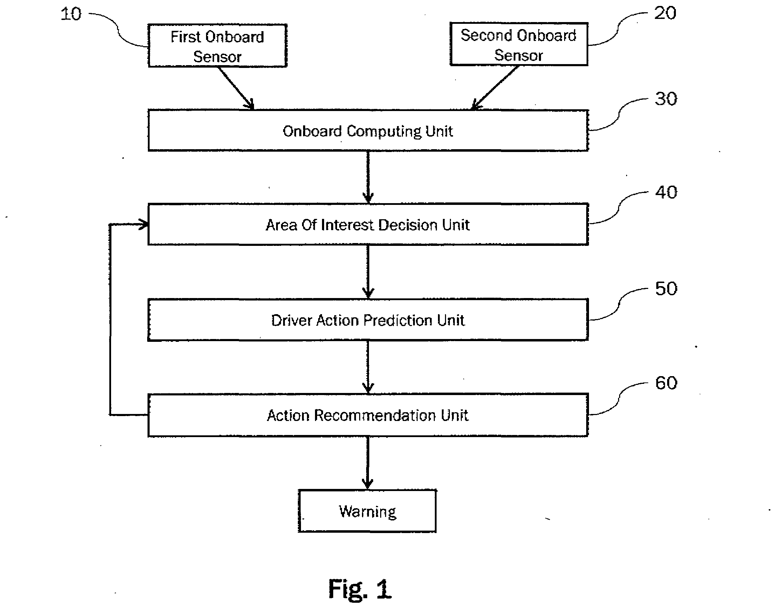

Figure 1 is schematic depiction of a general setup of an example of the disclosed collision warning device for a vehicle. The device comprises a first onboard sensor 10 which may be an image processor receiving Images of area in front of the host vehicle from a camera or a LiDAR-sensor. The first onboard sensor is configured to detect objects in front of the host vehicle such as other road users and infrastructure features. Also the collision warning device comprises a second onboard sensor 20 which may be a device for collecting structured data of the host vehicle, an onboard computing unit 30 which performs data processing of the perception data acquired by the first onboard sensor and the structured data acquired by the second onboard sensor, an area of interest (AOI) decision unit 40 that determines the shape and size of an AOI in front of the vehicle, a driver action prediction unit 50 that determines a driver action, for example, using a machine learning model and an action recommendation unit 60 that outputs a warning and/or a driving action recommendation to a driver of the host vehicle or a road user detected in front of the host vehicle.

In Figure 1 the arrows linking the boxes represent data outputs according to a data processing pipeline that ranges from the collection of perception data and structured data to the Issuing of a warning of the driver of the host vehicle or a road user in front of the host vehicle. It is also noted, that the described processing pipeline also includes one feedback loop wherein data output by the action recommendation unit 60 is input to the area of interest decision unit in order to provide feedback for refining the process of the determination of the area of interest and in consequence the reliability of the warnings output by the action recommendation unit 60.

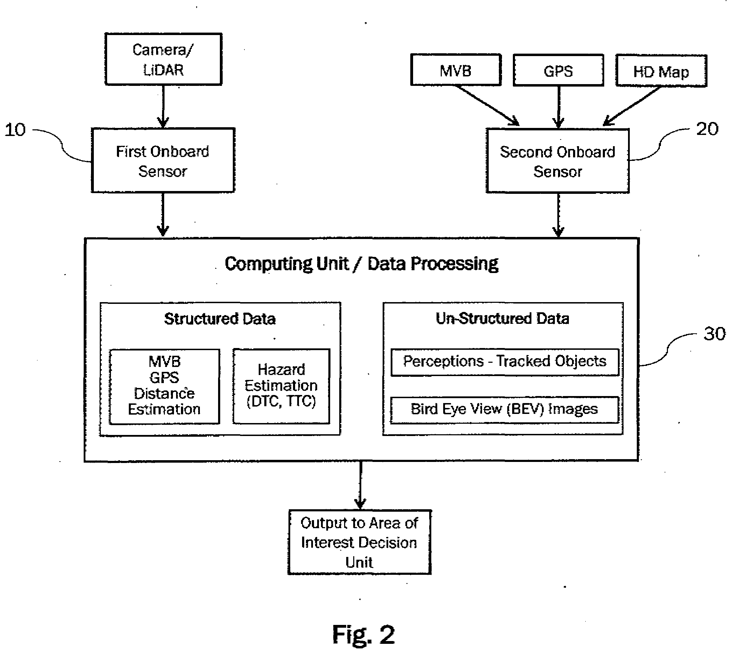

Figure 2 shows a more detailed overview over the process of data processing performed by the onboard computing unit 30. Perception data acquired by the first onboard sensor such as digital imagery of the environment in front of the host vehicle is input to the onboard computing unit 30. This perception data may have been created by a mono camera, a stereo camera or a LiDAR-sensor or any technically expedient combination thereof. It is to be noted that said perception data may also be referred to as unstructured data, because it has not yet been processed in order to extract structured datasets from it.

Additionally, structured data acquired by the second onboard sensor 20 at the same time is also input to the computing unit 30. This structured data may stem from a multifunction vehicle bus (MVB) installed in the host vehicle which is configured to collect and distribute functional and technical data of the host vehicle during its operation. Furthermore, the host vehicle may be installed with a GPS-sensor which is configured to determine the position of the host vehicle in a global coordinate system. Moreover, the host vehicle may be equipped with a digital high-definition map of the area in which it is operated that comprises data such as a base map (standard definition map), a geometric map, a semantic map, map priors and real-time information on the mapped area.

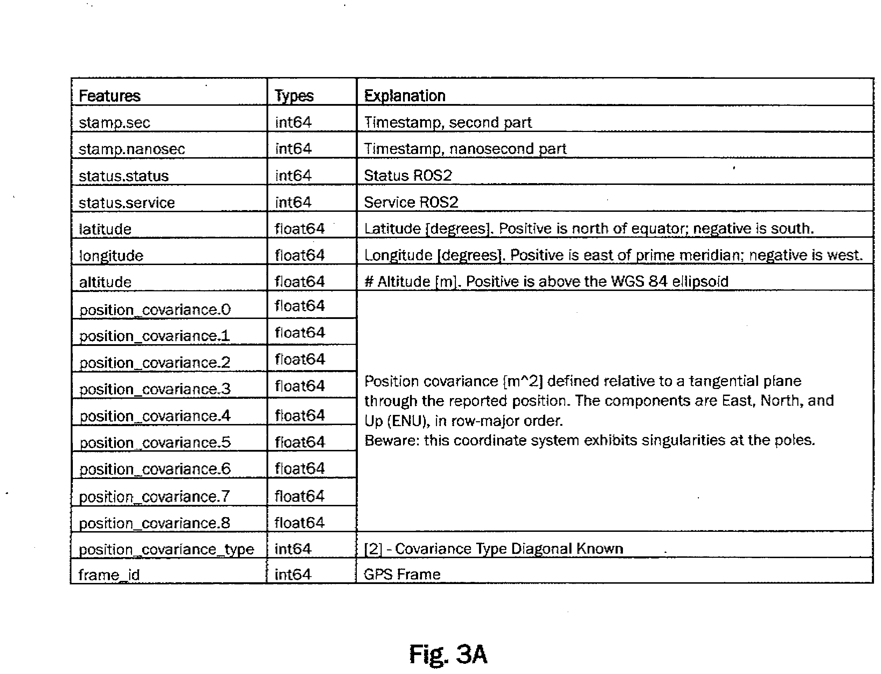

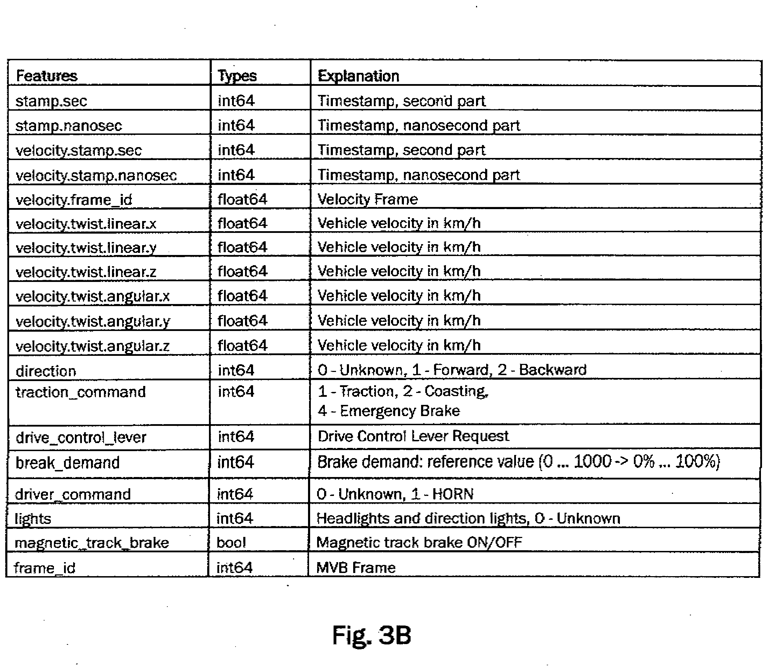

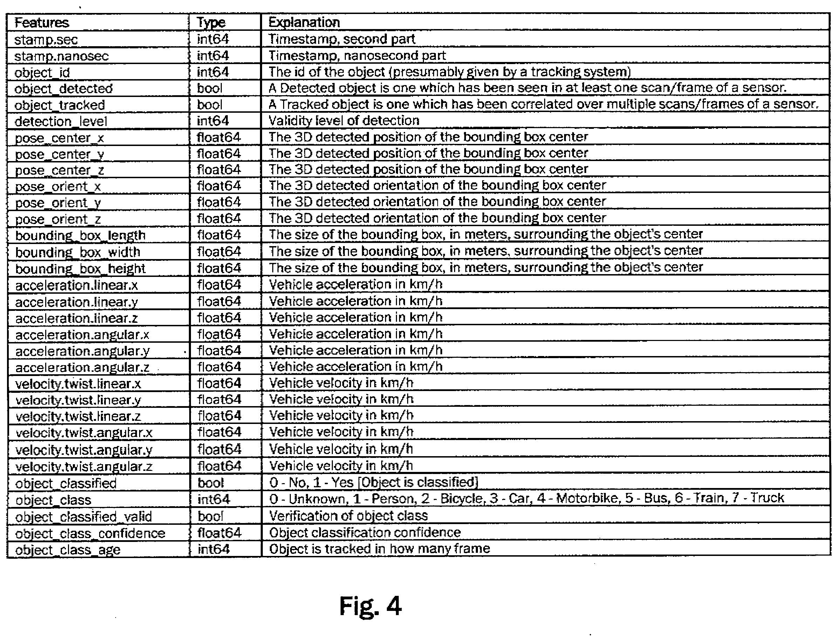

The computing unit 30 then performs data processing on the unstructured data and the structured data provided by the first onboard sensor 10 and the second onboard sensor 20 respectively. During the course of this process some of the unstructured data may be converted into structured data and some of the unstructured data may be converted to processed and refined unstructured data. In particular features such as timestamps, three-dimensional positions of objects detected or tracked by the first onboard sensor, trajectories of tracked objects and characteristics of tracked objects may be converted into structured data sets in order to estimate a distance of the host vehicle to the detected and/or tracked objects. Please also refer to Figures 3A, 3B for an example of unstructured data that has been converted to structured data by the computing unit 30. Furthermore, the computing unit 30 processes the structured data received from the second onboard sensor in order to determine the status, the trajectory and the position of the host vehicle in order to perform a hazard estimation. Please refer to Figure 4 for an example of structured data that is provided by the second onboard sensor 20. The process of hazard estimation will be described below.

Based on the above-described unstructured data, that has been converted to structured data and the structured data that has been provided by the second onboard sensor, the computing unit 30 performs a hazard estimation with regard to the surroundings of the host vehicle. More specifically, the onboard computing unit determines a distance to collision (DTC) and a time to collision (TTC) for each object detected and/or tracked by the first onboard sensor.

In addition to that, the onboard computing unit 30 performs a further processing step on the unstructured data received from the first onboard sensor 10. In particular, the computing unit 30 determines which of the objects that have been captured by the camera or LIDAR device are detected as obstacles or road users based on their optical appearances. For instance, vehicles, pedestrians or cyclists which have been determined to be road users in front of the host vehicle are detected because they might cross the path of the host vehicle and possibly cause a collision. This task can be performed according to a generic algorithm a person skilled In the art deems appropriate.

Moreover, the computing unit 30 uses the image received from the first onboard sensor 10 to create a bird eye view (BEV) image of the environment in front of the host vehicle. As explained above, the BEV imagery is a top-view representation of the environment in front of the host vehicle. In this representation, detected and/or tracked objects are included in the form of rectangular bounding boxes indicating the detected size of the objects in a horizontal plane corresponding to the surface on which the host vehicle is travelling. This task can be performed according to a generic algorithm a person skilled in the art deems appropriate.

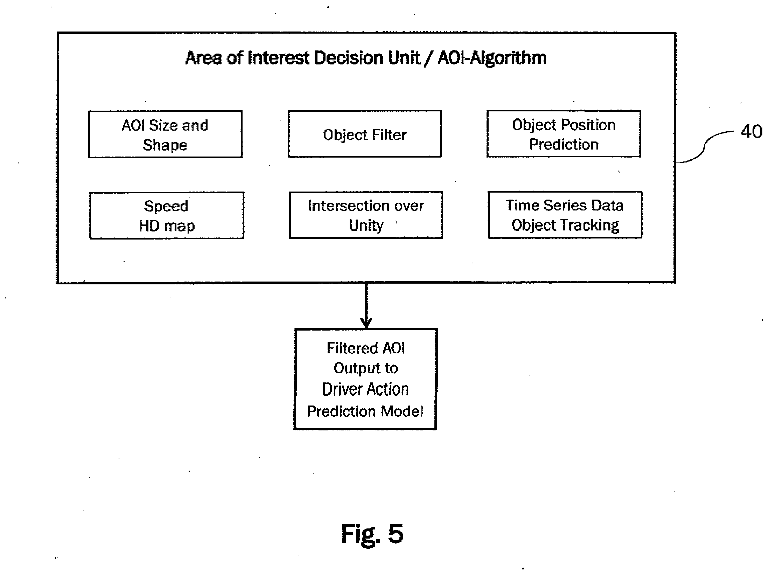

Figure 5 shows a more detailed overview over the process of area of interest-determination performed by the area of interest decision unit 40. The area of Interest decision unit 40 determines the size and shape of the area of interest. The determination of the shape and size of the area of interest is performed based on the speed of the host vehicle, road features that are stored in the HD-map and GPS position data of the host vehicle and/or other vehicles or dynamic objects in the vicinity/scene. More specifically, road features are infrastructure features that are relevant for the flow of traffic and the trajectories of other road users. In other words, road features may cross roads, traffic lights or drivable lanes in front of the host vehicle. Even further, the adaption of the area of interest may additionally or alternatively be based on weather information, e.g. during night times the area of interest may be expanded compared to bright day times, traffic information, e.g. during heavy traffic situations the area of interest may be increased, and the like.

Furthermore, the area of interest decision unit 40 performs a filtering process in which for instance, vehicles, pedestrians and objects which are not within the boundaries of the area of interest are filtered out from the bird eye view image. This filtering process is conducted according to the principles of intersection over unity (IOU) or a Jaccard Index. This means, that according to the above description, objects that have a Jaccard Index below a certain threshold are filtered out from the bird eye view image. In other words, only objects at the boundaries of the area of interest that have a predetermined overlap with the area of interest remain in the interest and are considered in the process of object position prediction which will be described hereafter.

The area of interest prediction unit 40 also performs a process of object position prediction in which the future positions of tracked objects within the area of interest are predicted. The tracking process is performed based on time series data and the positions of the detected objects within the area of interest. In other words, future positions of tracked objects are predicted based on their current speed and trajectory wherein a history of speeds and positions may be extracted from time series data in order to refine the predicted positions.

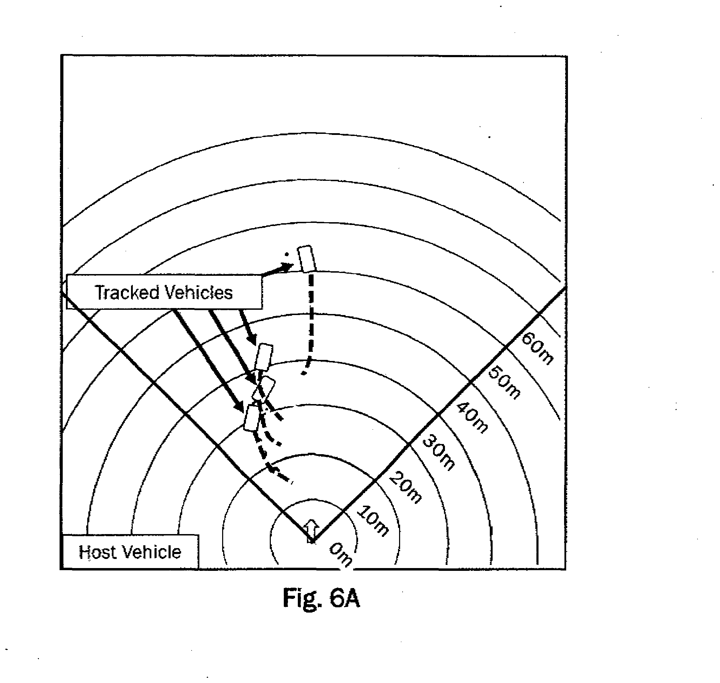

Figure 6A shows an example of a bird eye view image that has been created by the onboard computing unit 30 based on unstructured data received from the first onboard sensor 10. The vehicle (host/ego) is represented by an arrow. Other vehicles are shown by rectangular boxes. The past driving trajectory of the other, tracked vehicles is shown by dotted lines. The example shows a forward looking area of interest. As noted above, other options are possible within this disclosure, too, such as backward looking, 360° or the like. The schematic depicting distance radii and the like is merely an example and can be altered as needed or convenient. The area of interest is shown by a bold rectangular box, where the shape and/or size may be chosen differently or adapted as explained in the following, depending on one or more variables/factors. The below described examples for adaptions and related adaption factors may be combined in different ways.

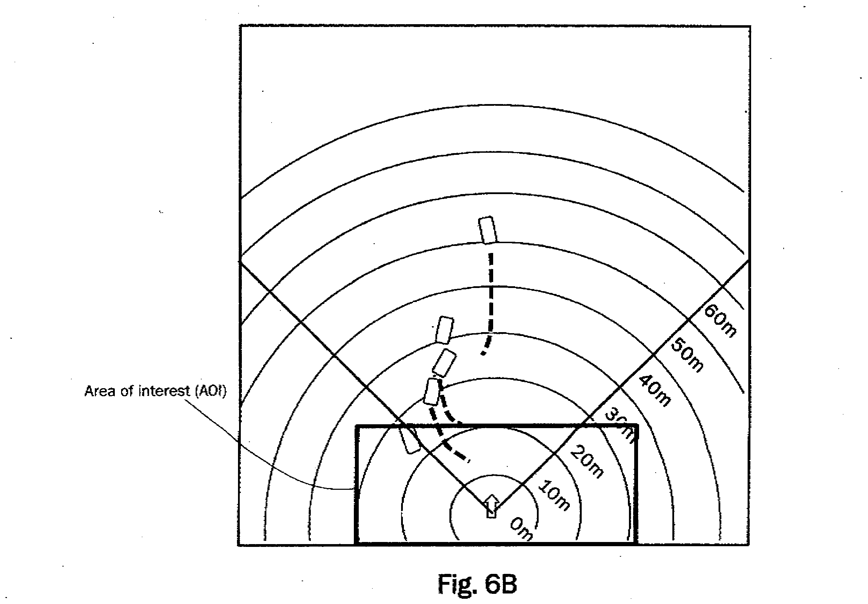

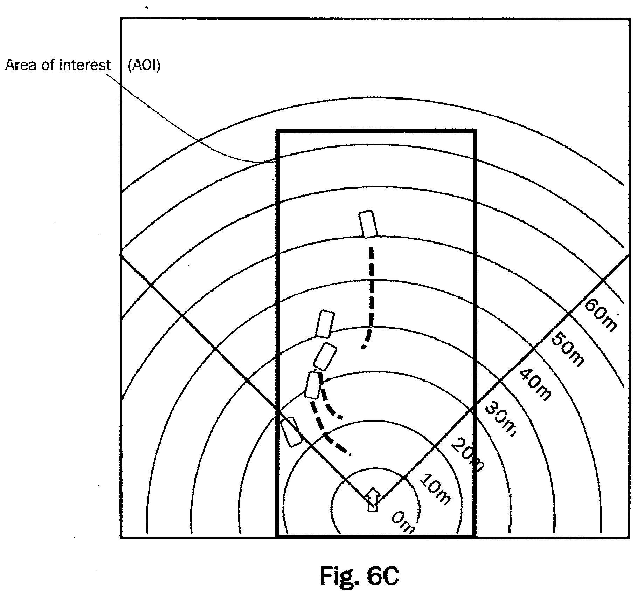

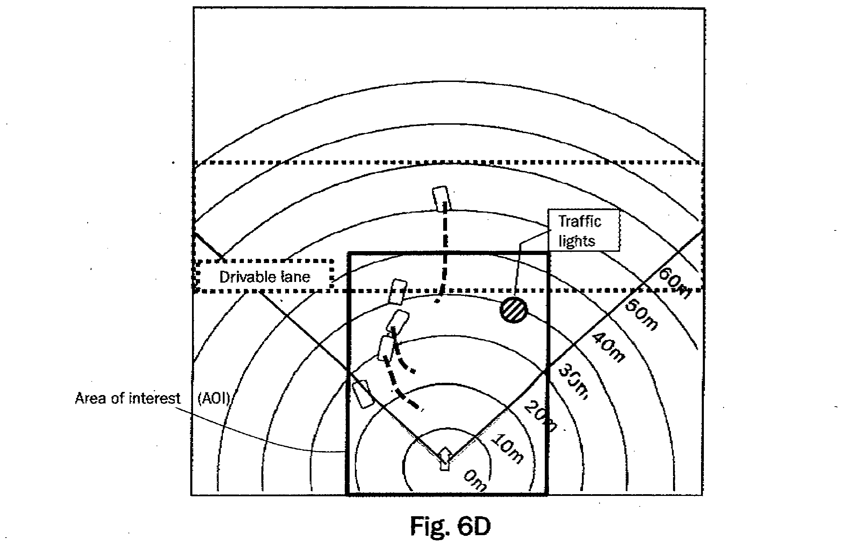

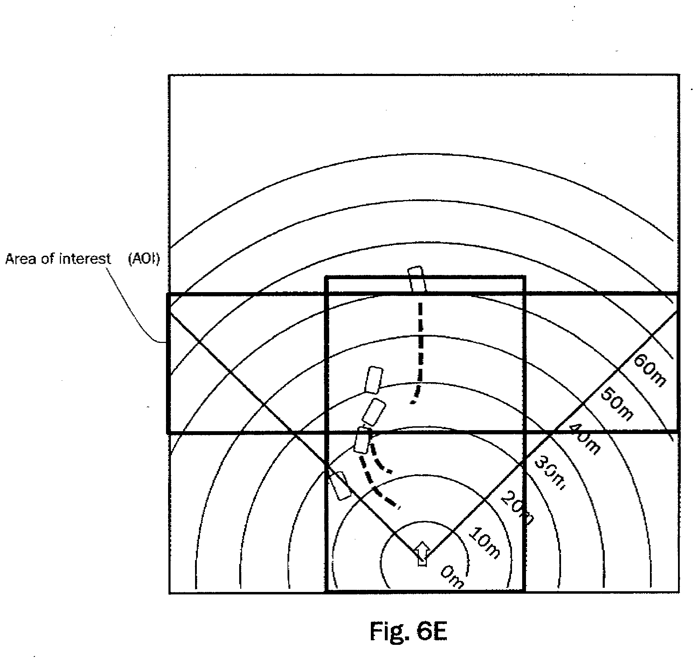

Figures 6B to 6E show examples of areas of interest with different shapes and sizes that have been determined in accordance with the current speed of the host vehicle and road features that have been extracted from HD-maps, as some examples for adapting the area of interest. The area of interest shown in Figure 6B has been determined in a situation in which the host vehicle travels with speed which may be below 10 km/h or the like. Figure 6C shows an area of interest that has been determined in a situation in which the host vehicle travels at higher speed which may be above 30 km/h. The area of interest shown in Figure 6D has been determined in a situation in which the host vehicle travels at medium speed which may be between 10 km/h and 30 km/h and wherein a red traffic light is situated at a cross road in front of the host vehicle. Figure 6E shows an area of interest that has been determined in a situation in which the host vehicle travels at high speed which may be above 30 km/h and a cross road is situated in front of the host vehicle.

The above examples of different shapes and sizes of the area of interest may also be combined. Further, the criteria/factors which are used for deciding the area of interest shape and size can be checked stepwise, e.g., firstly, the speed of the host vehicle is checked. If it is high, the area of interest is set to be larger. Then, secondly, the speed of other traffic participants is checked, e.g. based on speed road signs or the like or the type of the other participants, and if it is high, the area of interest may be increased further. Thirdly, the number of other traffic participants in the vicinity or in the sensing area of the host vehicle may be estimated and if there are more than a preset number of other traffic participants, the area of interest may be reduced. Even further, fourthly, the priority situation may be checked and if the host vehicle has priority at a crossing, the area of interest may be reduced in size or the placement/shape thereof may be adapted to relevant sections/areas of the crossing. The above steps may be combined in a single decision run or they may be performed stepwise and the order of the steps or which steps are applied, can be applied differently in each situation. If the unit 40 is not based on a trained machine learning unit then each situation may be pre-stored together with the relevant steps to be applied for each pre-stored situation.

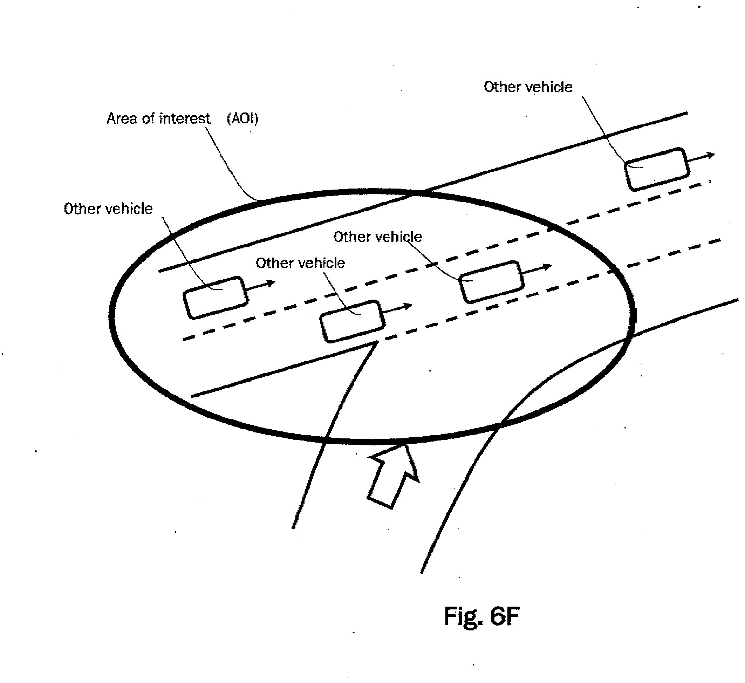

To further exemplify, additional and non-limiting exemplary situations are depicted by Figure 6F to 6I, i.e. these are examples which may be used but they do not exclude other possible examples and shall especially further the understanding of the general principles applied in this disclosure.

Figure 6F shows the vehicle (host/ego) again by a bold arrow and the area of interest here is shown by an elliptic shape. The situation/scene in this example shows the vehicle, e.g. a car, approaching a two-lane highway street via a ramp. The vehicle has detected four other vehicles which are driving on the two lanes of the highway at different positions and, in relation of the ego vehicle, in front of and at the side of the ego vehicle. The driving direction of the vehicles is indicates by the small arrows in front of the rectangular boxes representing these vehicles. In such situation, the ego vehicle has no priority during entering the highway, the speed of the other vehicles can be estimated to be rather high (e.g. compared to a rural or city street) and the traffic at the ramp is rather dense/high. Therefore, the unit 40 adapts the area of Interest to cover a wide area in front and at the side of the ego vehicle as depicted. Particularly, the area of interest is placed with a bigger part thereof at the part of the highway at the left side of the ego vehicle because vehicles which travel on the highway at this side relative to the ego vehicle will be possible obstacles for the ego vehicle when it wants to enter the highway via the ramp.

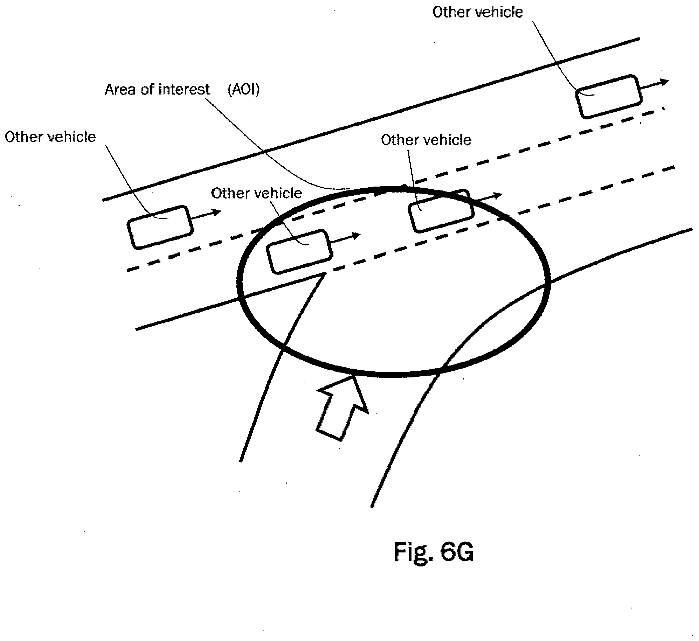

Accordingly, Figure 6G shows the ramp of a rural road (or a street on which the traveling speed is lower than on the street as shown in the example of Fig. 6F due to a different type of the street and/or due to other traffic speed limits indicated by traffic signs which the ego vehicle can read automatedly or from map information). The ego vehicle is again trying to enter the road via the ramp as shown and, as in Fig. 6F, other vehicles are already travelling on the road in the direction as indicated by the small arrows in front of the rectangular boxes representing these vehicles. Now, differently, the unit 40 finds out that due to the lower travelling speed of the other vehicles and the ego vehicle, the area of interest may be reduced to a smaller area of the road ahead (and partially on the side) because this is in this situation the relevant area for safely entering the road.

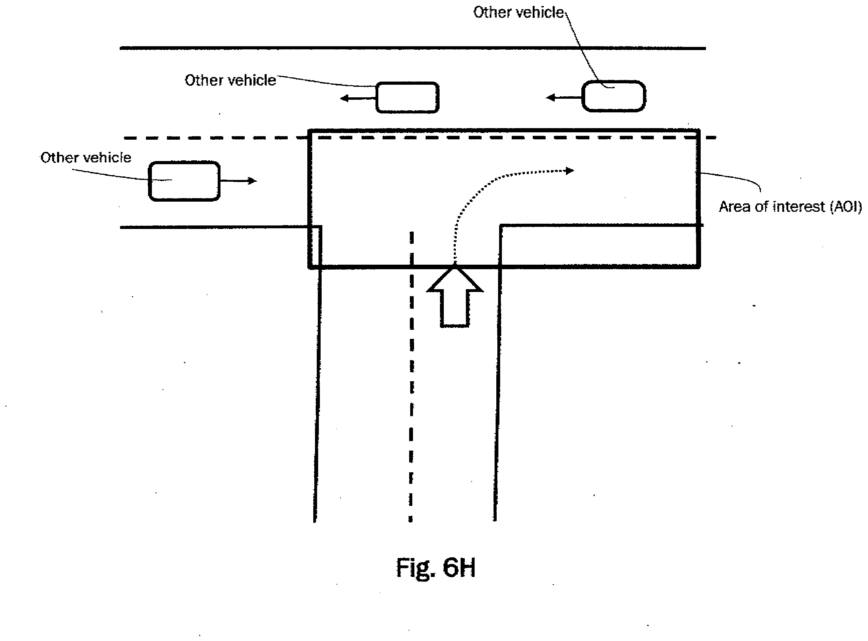

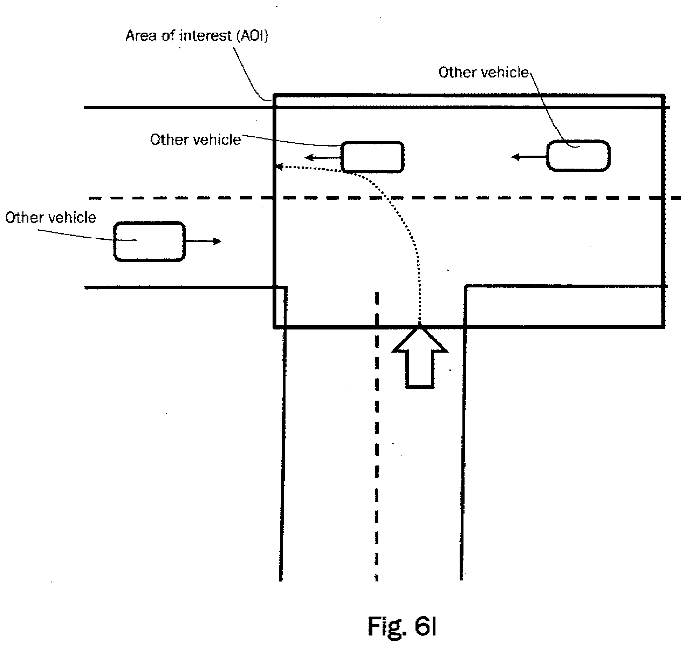

Another example of the situations which may be pre-stored is shown by Fig. 6H in which the ego vehicle approaches a T-Junction and due to general traffic rules, traffic signs or the like, the ego vehicle has priority to enter the lower lane shown in the Figure. The intended driving path of the ego vehicle is indicated by dotted arrow. Therefore, the area of interest is set to cover only the part of the road ahead and side which is relevant for safely entering. Alternatively, if the ego vehicle intends to enter the upper lane, i.e. going left, the area of interest is at least enlarged to cover the part of the upper lane, as shown in Fig. 6I.

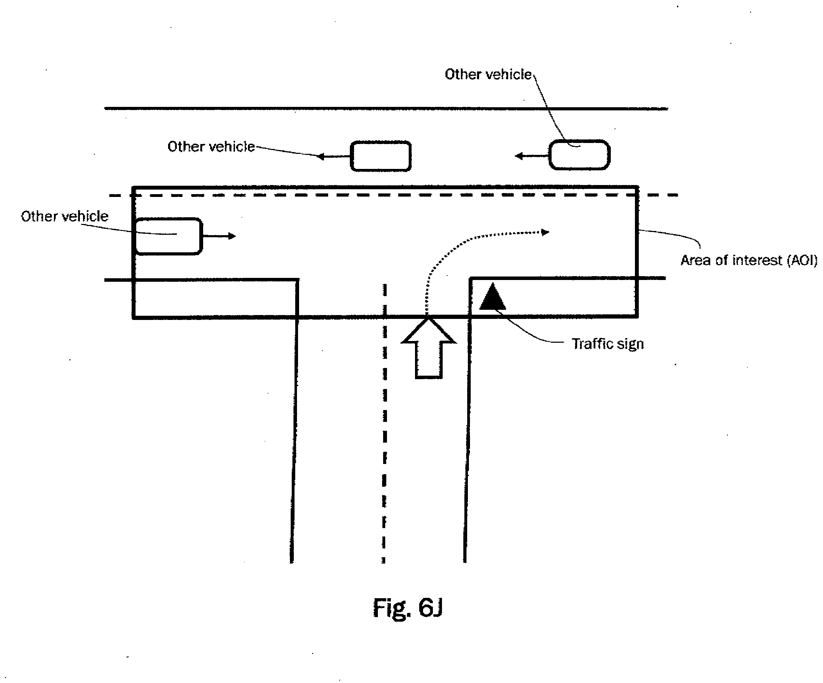

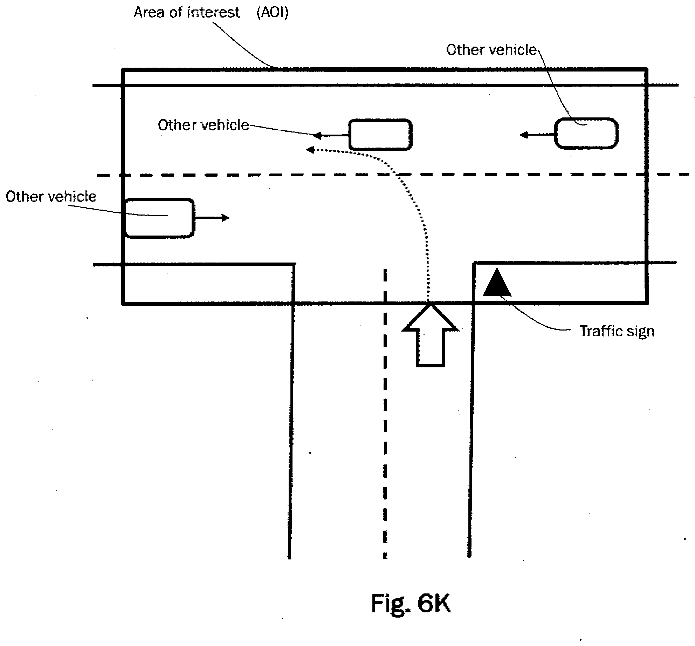

Differently, in Figs. 6J and 6K the ego vehicle does not have priority which is schematically depicted by a respective traffic sign. Therefore, the area of interest is enlarged compared to the previous examples in Figs. 6H and 6I. That is, the area of interest additionally (compared to Fig. 6H) covers the street ahead on both sides of the ego vehicle. The sides are covered, e.g., over the entire field of view of the sensors of the ego vehicle or at least as far that other vehicles can be detected long enough before they could become a danger for the ego vehicle, e.g. based on the estimated speed of them and the own speed of the ego vehicle. Correspondingly, in Fig. 6K, where the ego vehicle intends to enter the upper lane to the left, the area of interest is further expanded, compared to Fig. 6J, to cover both lanes.

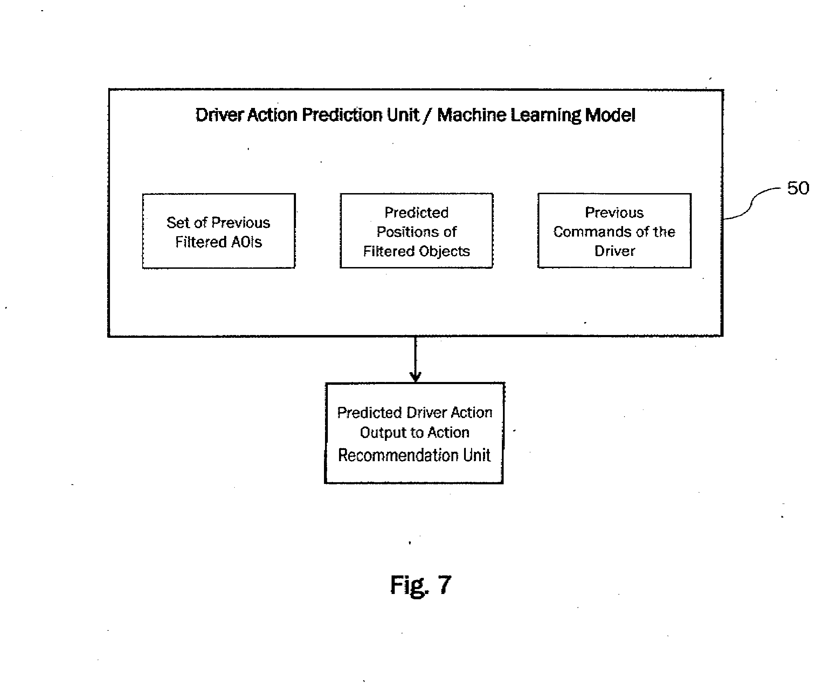

Figure 7 shows a more detailed overview over the process of driver action prediction performed by the driver action prediction unit 50. The driver action prediction unit 50 employs a machine learning model to predict the driver actions or command inputs issued by the driver of the host vehicle in response to the traffic situation in front of the host vehicle. The data used for the training of the machine learning model comprise a time series of filtered areas of interest provided by the area of interest decision unit 40, the predicted positions of the tracked vehicles inside the area of interest determined by the area of interest decision unit 40 and data relating to previous driver actions or command inputs issued by the driver in comparable traffic scenarios.

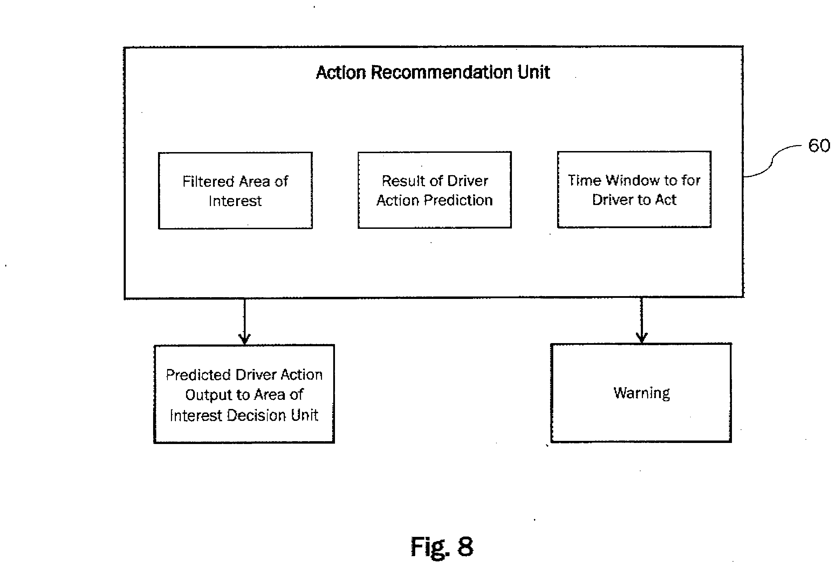

Figure 8 shows a more detailed overview over the process of issuing a warning (or action recommendation) by the action recommendation unit 60. The action recommendation unit 60 determines if a warning is issued to the driver of the host vehicle or a road user in front of the host vehicle based on the filtered area of interest provided by the area of interest decision unit 40, the result of the driver action prediction provided by the driver action prediction unit 50 and a predetermined time window for the driver of the host vehicle to actually perform a driver action according to the driver action predicted by the driver action prediction unit 50. Said time window may preferably be 3 seconds in order to give the driver of the host vehicle a sufficient time frame to carry out the necessary actions. However, depending on the traffic situation in front of the host vehicle and/or the urgency for a driver input the time frame until a warning is issued may be also shorter or longer than 3 seconds.

In addition to the output of a warning signal if the driver of the host vehicle should not carry out a predicted action in order to, for example, avoid a collision with another road user, the action recommendation unit 60 also outputs a predicted driver action to the area of interest decision unit 40. This may then be used to refine the determination process of the area of interest. In particular, including the results of the driver action prediction into the determination of the area of interest helps to facilitate a more precise mimicking of an experienced human driver. Based on the results of the driver action prediction that have been output by the trained machine learning model implemented by the driver action prediction unit 50 and/or the actual driver's actions, the area of interest can be adapted in shape and size in order to acknowledge areas in front of the host vehicle that are of particular interest for the driver of the host vehicle but would not have normally not been considered by the algorithm carrying out the determination of the area of interest.

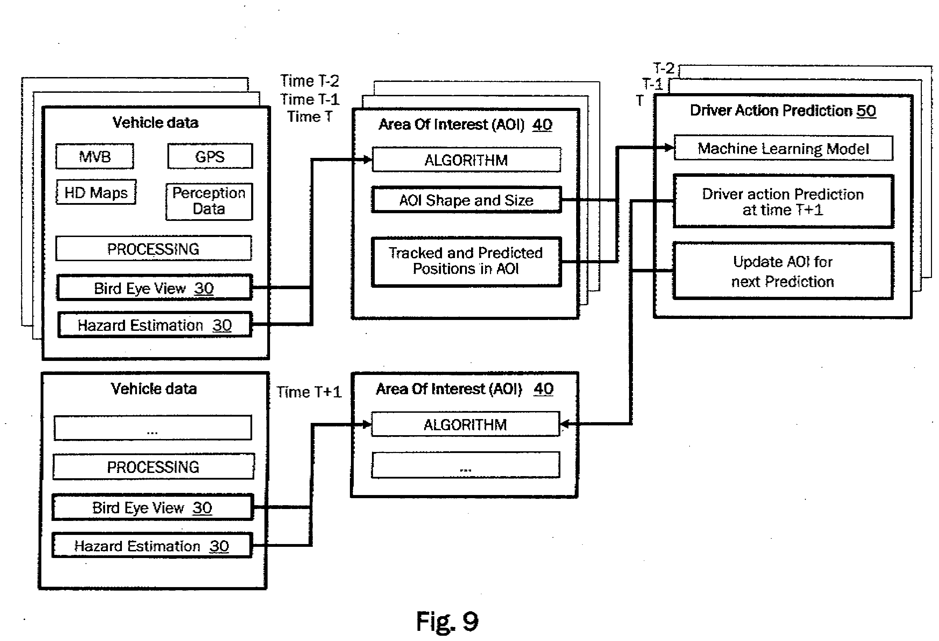

Figure 9 is a schematic overview over exemplary internal processes and interactions of the respective subunits of the above-described collision warning device for a vehicle. Structured and unstructured data acquired by the first onboard sensor 10 and the second onboard sensor 20 respectively are processed by the computing unit 30 in order to create, e.g., bird eye view imagery and conduct hazard estimation as previously described (reference signs for one preferred distribution of the here-described tasks are included in the units by underlined Arabic numbers, while the tasks may be performed by other units, too). Correspondingly processed structured and unstructured data is input to the area of interest decision unit 40 where the algorithm determines the size and shape of the area of interest and performs the prediction of the future positions of tracked objects (tracking may be performed by any unit, e.g. computing unit 30 or the like) situated within the area of interest. The determined area of interest and the predicted positions of tracked objects within the area of interest are input to the machine learning model implemented by the action recommendation unit 60. The driver action prediction unit 50 performs the prediction of driver actions and outputs a predicted driver action at a time step that lies one processing time step beyond the time step at which the data acquired by the first onboard sensor 10 and the second onboard sensor 20 has been processed by the computing unit 30. Additionally, the output of the driver action prediction Is Input to the area of interest determination unit 40 in order to refine the determination of the area of interest in a time step that lies one processing time step be yond the time step at which the data acquired by the first onboard sensor 10 and the second onboard sensor 20 has been processed by the computing unit 30. Correspondingly, the machine learning model for driver action prediction can be trained in an efficient manner and the output of the machine learning model can in turn be used to refine the determination of the area of interest.

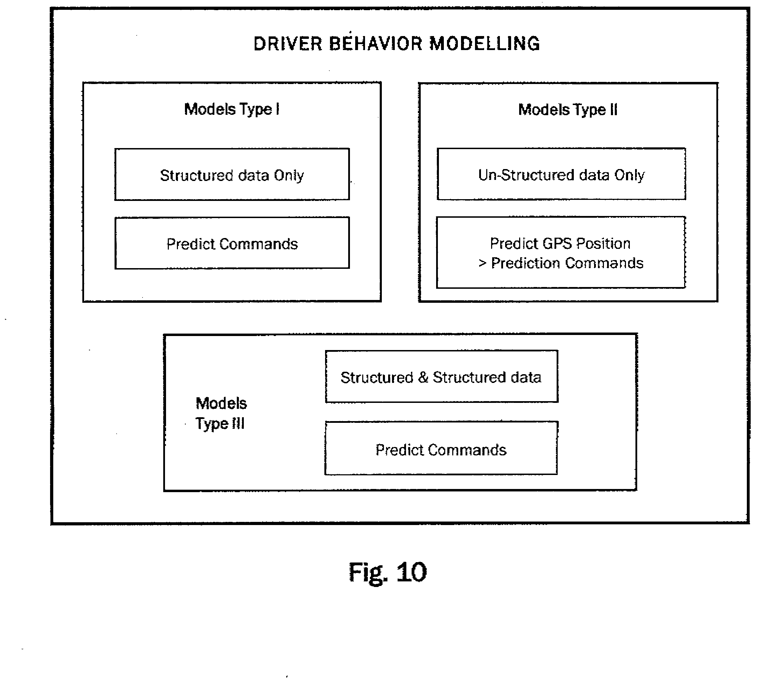

Figure 10 shows three exemplary types of driver behavior modelling. Type I as depicted in Figure 10 is a machine learning model for the prediction of driver actions based on structured data only. According to this model, driver action prediction is performed by the driver action prediction unit 50 only by using structured data as training data. More specifically, the driver action prediction may be performed using the exemplary data shown in Figures 3A and 3B. Furthermore, also unstructured data that has been converted Into structured data as shown in Figure 4 can be used as respective training data.

Type II is depicted in Figure 10 is a machine leaning model for the prediction of driver actions based on unstructured data only. According to this model, driver action prediction is performed by the driver action prediction unit 50 only by using unstructured data as training data. More specifically, the driver action prediction may be performed using the perception data created by the computing unit comprising images captured of an area in front of the host vehicle and detected objects or road users.

Type III as depicted in Figure 10 is a machine learning model for the prediction of driver actions based on structured and unstructured data. According to this model, driver action prediction is performed by the driver action prediction unit 50 by using structured data and unstructured data as training data. More specifically, the driver action prediction may be performed using perception data, high-definition maps and structured data of the host vehicle.

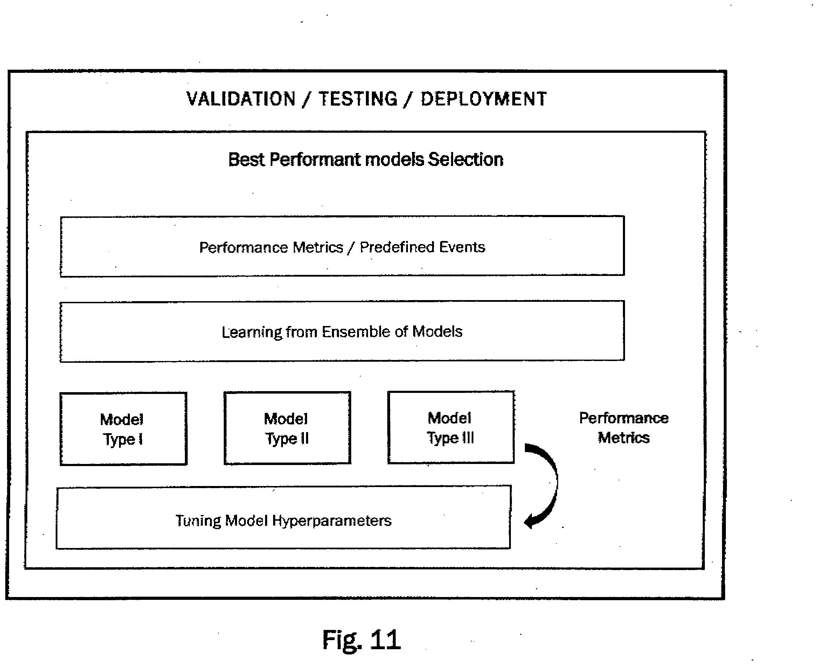

Figure 11 shows an exemplary process of validation, testing and deployment of the machine learning/Al models preferably used in the process of driver action prediction. The best performing models for driver action prediction of Type I to Type III are selected according to performance metrics which may be adapted to estimate the number of cases in which the driver action prediction of each respective model has been correct. The performance metrics may be defined with respect to the success rate with which the respective models lead to the output of a warning which is appropriate in the case of a predefined event as described above. In other words, if the driver of the host vehicle does not carry out a driver action, driver Input or driver control command that has been correctly predicted by the driver action prediction unit, a warning that is considered to be appropriate will be output by the action recommendation unit 60. On the other hand, if the action recommendation unit 60 outputs an unnecessary warning or misses a situation in which a warning would have been appropriate, the success rate is negatively affected.

Furthermore, the respective individual models may be further refined by using the output of an ensemble of models as training data. This way the driver action prediction models can be additionally trained based on the output of other models that use different training data as described with respect to Figure 11 themselves. Correspondingly, possible shortcomings of one model can be compensated by using the output of another model as additional training data. Also, benchmarking between different Types of models can be performed in order to assess the performance of the respective models.

Moreover, by applying the performance metrics in order to determine the accuracy of, for example, model Type I to Type III a tuning of model hyperparameters can be carried out. Such hyperparameters used in the training of the driver action prediction models may for example be criteria based on a high-definition map, such as drivable lanes or traffic light positions, GPS-positions which are linked with certain driving maneuvers and velocity values at specified GPS-positions. After those hyperparameters have been set to previously estimated values, they can be optimized by referring to the success rate of driver action prediction of the respective model types.

Accordingly, the respective driver action prediction models are first validated by selecting the models which offer the best performance. After that the models are tested in real-life conditions. If the respective models also deliver satisfying performance in a real-life setting, they are deployed to come into operation as a fully functional collision warning system for assisting a human driver of a host vehicle.

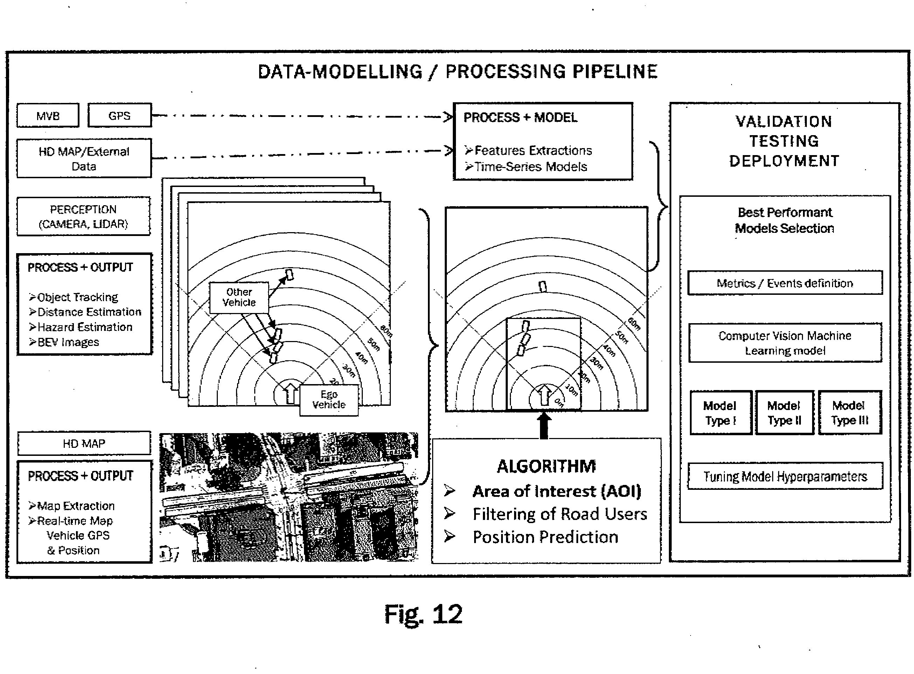

Figure 12 is a schematic overview in which conventional processing and modelling of driver action prediction is compared with the processing and modelling carried out according to the present subject-matter. As depicted in the top part of Figure 12, in a conventional process, the data collected from the multifunction vehicle bus (MVB), the GPS-position of the host vehicle and a high-definition map are fed directly into modelling, where algorithms can predict a future position of the host vehicle relative to other road users in a GPS coordinate system or in the high-definition map. As the number of detected and tracked objects, which, for example, have been tracked and detected on a real-time high-definition map, grows, the processing power required to process and store more objects also increases. When there is a number of infrastructure features or road users on the scene (i.e., high-definition map) which are irrelevant for the prediction of a predefined event leading to the output of a warning processing power is wasted.

The present subject-matter addresses the above problems, in particular, with a specifically designed algorithm to determine the area of interest and thereby filter out irrelevant infrastructure features and road users before inputting accordingly modified bird-eye-view images to the process of driver action prediction. As depicted in Figure 12 the area of interest is determined by gathering the previously described structured and unstructured data including perception data from, for instance a camera or a LiDAR device, and data collected from the host vehicle MVB and GPS-positions of the host vehicle as well as data from high-definition maps and then using the specific algorithm for area of interest determination to adaptively determine the area of interest at each predetermined time-step. The determination of the area of interest is carried out according to the above-described processes.

After that the area of interest input to the process of driver action prediction and subsequently the best performing models for driver action prediction may be validated, tested and/or deployed as shown in Figure 11.

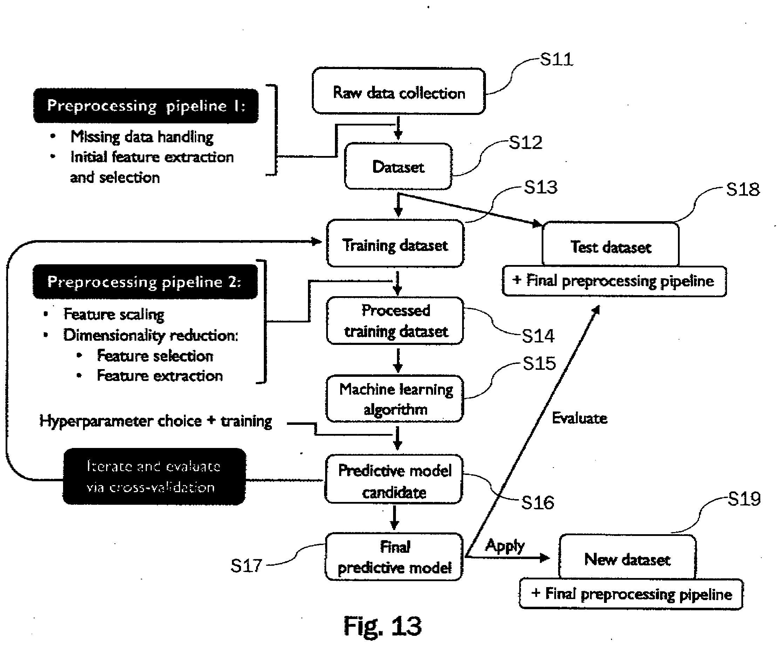

Figure 13 is an exemplary overview over the data processing steps that lead to the deployment of the driver action prediction model in a real traffic environment. In step S11 raw data in the form of raw images of an area in the vicinity of the host vehicle are collected from image sensors such as a camera or LiDAR device by the first onboard sensor 10. In step S12, the collected data is input into a first preprocessing pipeline in which the computing unit 30 performs a process of image processing in order to compensate for missing data due to poor image quality and to carry out the detection of obstacles and road users. In step S13, the resulting dataset comprising the processed raw images and the detected obstacle/road users is then converted into bird-eye-view Images by the computing unit. The accordingly generated bird-eye-view images comprising the obstacles/road users detected by the first onboard sensor are output as training dataset. In step S14 the training dataset is further processed by the area of interest decision unit 40 by determining the area of interest that lies within the bird-eye-Images. This happens in a second preprocessing pipeline in which the area of interest is scaled according to the Infrastructure features that lie within the bird-eye-view images and a dimensionality reduction is performed by selecting and extracting obstacles/road users that are considered to be relevant for-collision warning. In other words, the processed training dataset created in step S14 comprises the area of interest, including the objects/road users that have not been filtered out, extracted from the image created by the computing unit 30.

In step S15 the processed training dataset is input to the machine learning algorithm for driver action prediction. The machine learning algorithm is trained to predict possible future events by using a set of previously extracted areas of interest. In step S16 a predictive model candidate is generated by tuning the hyperparameters of the machine learning model as described above during the training process. The predictive model candidate is then used to output a warning to a driver of the host vehicle when a predefined event is predicted. The predictive model candidate is furthermore used to provide an input in the form of a training data set for step S13 In an iterative training process in which the predictive model candidate is evaluated via cross-validation. In step 17 a final predictive model that has been validated in the iterative training process is determined. In step S18 the final predictive model may be subjected to an evaluation process in which it is used in conjunction with a test dataset generated on the basis of the dataset created in step S12. This process may be combined with a final preprocessing pipeline in order to refine the definition of a predefined event. In step S19 the final predictive model is deployed to be used with a new dataset which may have been acquired in a real traffic environment. This process may be combined with a final preprocessing pipeline in order to refine the definition of a predefined event. By comparing the driver action prediction results of steps S18 and S19 the performance of the final predictive models created as a result of the iterative and cross-validated learning process can be evaluated. This comparison may provide insights Into the effectiveness of the machine learning model. Accordingly, If the performance of a final predictive model should be poor, the model could be altered by, for example, changing the hyperparameters or introducing an increased number of iterations in order to enhance training.

As will be appreciated by one of skill in the art, the present disclosure, as described hereinabove and the accompanying figures, may be embodied as a method, an apparatus (including a device, machine, system, computer program product, and/or any other apparatus), or a combination of the foregoing.

Accordingly, embodiments of the present disclosure may take the form of an entirely hardware embodiment, an entirely software embodiment (including firmware, resident software, micro-code, etc.), or an embodiment combining software and hardware aspects that may generally be referred to herein as a "system". Furthermore, embodiments of the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally may indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

Aspects are described hereinabove with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

These computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment.

It should be noted that terms such as "server" and "processor" may be used herein to describe devices that may be used in certain embodiments and should not be construed to limit to any particular device type unless the context otherwise requires. Thus, a device may include, without limitation, a bridge, router, bridge-router (b-router), switch, node, server, computer, appliance, or other type of device. Such devices typically Include one or more network interfaces for communicating over a communication network and a processor (e.g., a microprocessor with memory and other peripherals and/or application-specific hardware) configured accordingly to perform device functions.

Communication networks generally may include public and/or private networks; may Include local-area, wide-area, metropolitan-area, storage, and/or other types of networks; and may employ communication technologies including, but in no way limited to, analogue technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternative embodiments may, as appropriate, employ variations of such communication protocols (e.g., modifications or extensions of the protocol that may be made from time-to-time) or other protocols either known or developed in the future.

It should also be noted that logic flows may be described herein to demonstrate various aspects and should not be construed to limit the disclosure to any particular logic flow or logic implementation. The described logic may be partitioned into different logic blocks (e.g., programs, modules, functions, or subroutines) without changing the overall results.

Often times, logic elements may be added, modified, omitted, performed in a different order, or implemented using different logic constructs (e.g., logic gates, looping primitives, conditional logic, and other logic constructs) without changing the overall results.

The present disclosure may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, Integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but In no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of embodiments may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" may refer generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analogue technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some aspects may be implemented as a combination of both software (e.g., a computer program product) and hardware. Still other embodiments of the may be implemented as entirely hardware, or entirely software.

While certain exemplary aspects have been described and shown in the accompanying drawings, it is to be understood that such aspects are illustrative, and that the embodiments are not limited to the specific constructions and arrangements shown and described, since various other changes, combinations, omissions, modifications and substitutions, in addition to those set forth in the above paragraphs, are possible.

Those skilled in the art will appreciate that various adaptations, modifications, and/or combination of the just described embodiments can be configured. Therefore, it Is to be understood that, within the scope of the appended claims, the disclosure may be practiced other than as specifically described herein. For example, unless expressly stated otherwise, the steps of processes described herein may be performed in orders different from those described herein and one or more steps may be combined, split, or performed simultaneously.

Those skilled in the art will also appreciate, In view of this disclosure, that different embodiments or aspects described herein may be combined to form other embodiments.

## Claims

1. Driving action recommendation and collision warning device for a vehicle comprising:
a first onboard sensor (10) configured to receive images of an area in the vicinity of the vehicle from an image sensor and to detect obstacles in the received images;
a second onboard sensor (20) configured to acquire structured data of the vehicle;
a computing unit (30) configured to generate an image by converting the images received from an image sensor into a schematic representation comprising the obstacles detected by the first onboard sensor (10),
an area of interest decision unit (40) configured to extract an area of interest from the image generated by the computing unit (30) based on the structured data of the vehicle;
a driver action prediction unit (50) configured to predict a possible future event based on the extracted area of interest and a driver action prediction model,
an action recommendation unit (60) configured to output a driving action recommendation and/or a warning to a driver of the vehicle or a person in the vicinity of the vehicle when a predefined event is predicted.

2. The device for a vehicle according to claim 1, wherein
the second onboard sensor (20) is further configured to store traffic and/or map information;
the area of interest decision unit (40) is configured to change the area of interest based on the traffic and/or map information.

3. The device for a vehicle according to at least one of the previous claims, wherein
the second onboard sensor (20) is configured to store a history of driver inputs;
the area of interest decision unit (40) is configured to change the area of interest based on the history of driver inputs.

4. The device for a vehicle according to at least one of the previous claims, wherein
the image generated by the computing unit (30) is a bird-eye-view image schematically representing the environment of the vehicle.

5. The device for a vehicle according to claim 4, wherein
the area of interest decision unit (40) is configured to extract the area of interest from the bird-eye-view image generated by the computing unit (30).

6. The device for a vehicle according to any of claim 5, wherein
the area of interest decision unit (40) is configured to filter objects detected by the first onboard sensor (10) that are located within the area of interest according to the principles of intersection over union.

7. The device for a vehicle according to at least one of the previous claims, wherein
the area of interest decision unit (40) is configured to adapt the area of interest to the speed of the vehicle.

8. The device for a vehicle according to at least one of the previous claims, wherein
the area of interest decision unit (40) is further configured to track objects that have not been filtered out from the area of interest and to perform a process of position prediction for said objects.

9. The device for a vehicle according to at least one of the previous claims, wherein
the objects tracked by the area of interest decision unit (40) that are located within the area of interest are selected based on an overlap threshold of their intersection over union.

10. The device for a vehicle according to at least one of the previous claims, wherein
the objects tracked by the area of interest decision unit (40) that are located within the area of interest are used as input data for the driver action prediction model.

11. The device for a vehicle according to at least one of the previous claims, wherein
the driver action prediction model is a machine learning model which has been trained by the output of the process of position prediction, the shape and position of the area of interest and previous commands of the driver of the vehicle.

12. The device for a vehicle according to claim 11, wherein
the output of the driver action prediction model is used as an input into the determination of the area of interest.

13. System comprising the device according to at least one of the previous claims and a vehicle.

14. Method for outputting a collision warning to a driver of a vehicle, including the steps of
- receiving images of an area in front of the vehicle from an image sensor;
- detecting obstacles in the images by a second onboard sensor;
- acquiring structured data of the vehicle by a first onboard sensor;
- generating an image based by converting the image into a schematic representation comprising the detected obstacles;
- extracting an area of interest from the generated image based on the structured data of the vehicle;
- using a driver action prediction model to predict a possible future event based on the extracted area of interest; and
- outputting a driving action recommendation and/or warning for a driver of the vehicle or a person in the vicinity of the vehicle when a predefined event is predicted.

15. Computer program product configured to carry out the method according to claim 14 when executed on a computer.

## Patentansprüche

1. Fahrhandlungsempfehlungs- und Kollisionswarnvorrichtung für ein Fahrzeug, die umfasst:
einen ersten bordeigenen Sensor (10), der konfiguriert ist, Bilder eines Bereichs in der Umgebung des Fahrzeugs von einem Bildsensor zu empfangen und Hindernisse in den empfangenen Bildern zu detektieren;
einen zweiten bordeigenen Sensor (20), der konfiguriert ist, strukturierte Daten des Fahrzeugs zu erfassen;
eine Recheneinheit (30), die konfiguriert ist, ein Bild durch Umsetzen der von dem Bildsensor empfangenen Bilder in eine schematische Darstellung, die die durch den ersten bordeigenen Sensor (10) detektierten Hindernisse umfasst, zu erzeugen;
eine Bereich-von-Interesse-Entscheidungseinheit (40), die konfiguriert ist, einen Bereich von Interesse aus dem durch die Recheneinheit (30) erzeugten Bild basierend auf den strukturierten Daten des Fahrzeugs zu extrahieren;
eine Fahrerhandlungs-Vorhersageeinheit (50), die konfiguriert ist, ein mögliches zukünftiges Ereignis basierend auf dem extrahierten Bereich von Interesse und einem Fahrerhandlungs-Vorhersagemodell vorherzusagen,
eine Handlungsempfehlungseinheit (60), die konfiguriert ist, eine Fahrhandlungsempfehlung und/oder eine Warnung an einen Fahrer des Fahrzeugs oder an eine Person in der Nähe des Fahrzeugs auszugeben, wenn ein vorgegebenes Ereignis vorhergesagt wird.

2. Vorrichtung für ein Fahrzeug nach Anspruch 1, wobei
der zweite bordeigene Sensor (20) ferner konfiguriert ist, Verkehrs-und/oder Karteninformationen zu speichern;
die Bereich-von-Interesse-Entscheidungseinheit (40) konfiguriert ist, den Bereich von Interesse basierend auf den Verkehrs- und/oder Karteninformationen zu ändern.

3. Vorrichtung für ein Fahrzeug nach wenigstens einem der vorhergehenden Ansprüche, wobei
der zweite bordeigene Sensor (20) konfiguriert ist, eine Historie der Fahrereingaben zu speichern;
die Bereich-von-Interesse-Entscheidungseinheit (40) konfiguriert ist, den Bereich von Interesse basierend auf der Historie der Fahrereingaben zu ändern.

4. Vorrichtung für ein Fahrzeug nach wenigstens einem der vorhergehenden Ansprüche, wobei
das durch die Recheneinheit (30) erzeugte Bild ein Bild aus der Vogelperspektive ist, das die Umgebung des Fahrzeugs schematisch darstellt.

5. Vorrichtung für ein Fahrzeug nach Anspruch 4, wobei
die Bereich-von-Interesse-Entscheidungseinheit (40) konfiguriert ist, den Bereich von Interesse aus dem durch die Recheneinheit (30) erzeugten Bild aus der Vogelperspektive zu extrahieren.

6. Vorrichtung für ein Fahrzeug nach Anspruch 5, wobei
die Bereich-von-Interesse-Entscheidungseinheit (40) konfiguriert ist, die durch den ersten bordeigenen Sensor (10) detektierten Objekte, die sich innerhalb des Bereichs von Interesse befinden, gemäß den Prinzipien der Schnittmenge über der Vereinigungsmenge zu filtern.

7. Vorrichtung für ein Fahrzeug nach wenigstens einem der vorhergehenden Ansprüche, wobei
die Bereich-von-Interesse-Entscheidungseinheit (40) konfiguriert ist, den Bereich von Interesse an die Geschwindigkeit des Fahrzeugs anzupassen.

8. Vorrichtung für ein Fahrzeug nach wenigstens einem der vorhergehenden Ansprüche, wobei
die Bereich-von-Interesse-Entscheidungseinheit (40) ferner konfiguriert ist, die Objekte, die nicht aus dem Bereich von Interesse herausgefiltert worden sind, zu verfolgen und einen Prozess der Positionsvorhersage für diese Objekte auszuführen.

9. Vorrichtung für ein Fahrzeug nach wenigstens einem der vorhergehenden Ansprüche, wobei
die durch die Bereich-von-Interesse-Entscheidungseinheit (40) verfolgten Objekte, die sich innerhalb des Bereichs von Interesse befinden, basierend auf einem Überlappungsschwellenwert ihrer Schnittmenge über ihrer Vereinigungsmenge ausgewählt werden.

10. Vorrichtung für ein Fahrzeug nach wenigstens einem der vorhergehenden Ansprüche, wobei
die durch die Bereich-von-Interesse-Entscheidungseinheit (40) verfolgten Objekte, die sich innerhalb des Bereichs von Interesse befinden, als die Eingangsdaten für das Fahrerhandlungs-Vorhersagemodell verwendet werden.

11. Vorrichtung für ein Fahrzeug nach wenigstens einem der vorhergehenden Ansprüche, wobei
das Fahrerhandlungs-Vorhersagemodell ein Modell des maschinellen Lernens ist, das durch die Ausgabe des Prozesses der Positionsvorhersage, die Form und die Position des Bereichs von Interesse und verschiedene Befehle des Fahrers des Fahrzeugs trainiert worden ist.

12. Vorrichtung für ein Fahrzeug nach Anspruch 11, wobei
die Ausgabe des Fahrerhandlungs-Vorhersagemodells als eine Eingabe in die Bestimmung des Bereichs von Interesse verwendet wird.

13. System, das die Vorrichtung nach wenigstens einem der vorhergehenden Ansprüche und ein Fahrzeug umfasst.

14. Verfahren zum Ausgeben einer Kollisionswarnung an einen Fahrer eines Fahrzeugs, wobei das Verfahren die folgenden Schritte umfasst:
- Empfangen von Bildern eines Bereichs vor dem Fahrzeug von einem Bildsensor;
- Detektieren von Hindernissen in den Bildern durch einen zweiten bordeigenen Sensor;
- Erfassen strukturierter Daten des Fahrzeugs durch einen ersten bordeigenen Sensor;
- Erzeugen eines Bildes basierend auf dem Umsetzen des Bildes in eine schematische Darstellung, die die detektierten Hindernisse umfasst;
- Extrahieren eines Bereichs von Interesse aus dem erzeugten Bild basierend auf den strukturierten Daten des Fahrzeugs;
- Verwenden eines Fahrerhandlungs-Vorhersagemodells, um ein mögliches zukünftiges Ereignis basierend auf dem extrahierten Bereich von Interesse vorherzusagen; und
- Ausgeben einer Fahrhandlungsempfehlung und/oder einer Warnung an einen Fahrer des Fahrzeugs oder an eine Person in der Nähe des Fahrzeugs, wenn ein vorgegebenes Ereignis vorhergesagt wird.

15. Computerprogrammprodukt, das konfiguriert ist, das Verfahren nach Anspruch 14 auszuführen, wenn es in einem Computer ausgeführt wird.

## Revendications

1. Dispositif de recommandation d'action de conduite et d'avertissement de collision pour un véhicule comprenant :
un premier capteur embarqué (10) configuré pour recevoir des images d'une zone au voisinage du véhicule depuis un capteur d'images et pour détecter des obstacles dans les images reçues ;
un deuxième capteur embarqué (20) configuré pour acquérir des données structurées du véhicule ;
une unité de calcul (30) configurée pour générer une image en convertissant les images reçues depuis un capteur d'images en une représentation schématique comprenant les obstacles détectés par le premier capteur embarqué (10),
une unité de décision de zone d'intérêt (40) configurée pour extraire une zone d'intérêt à partir de l'image générée par l'unité de calcul (30) sur la base des données structurées du véhicule ;
une unité de prédiction d'action de conducteur (50) configurée pour prédire un événement futur possible sur la base de la zone d'intérêt extraite et d'un modèle de prédiction d'action de conducteur,
une unité de recommandation d'action (60) configurée pour sortir une recommandation d'action de conduite et/ou un avertissement à l'attention d'un conducteur du véhicule ou d'une personne au voisinage du véhicule quand un événement prédéfini est prédit.

2. Dispositif pour un véhicule selon la revendication 1, dans lequel le deuxième capteur embarqué (20) est en outre configuré pour stocker des informations de circulation et/ou cartographiques ;
l'unité de décision de zone d'intérêt (40) est configurée pour changer la zone d'intérêt sur la base des informations de trafic et/ou cartographiques.

3. Dispositif pour un véhicule selon l'une au moins des revendications précédentes, dans lequel
le deuxième capteur embarqué (20) est configuré pour stocker un historique d'entrées de conducteur ;
l'unité de décision de zone d'intérêt (40) est configurée pour changer la zone d'intérêt sur la base de l'historique d'entrées de conducteur.

4. Dispositif pour un véhicule selon l'une au moins des revendications précédentes, dans lequel
l'image générée par l'unité de calcul (30) est une image en vue de dessus représentant schématiquement l'environnement du véhicule.

5. Dispositif pour un véhicule selon la revendication 4, dans lequel l'unité de décision de zone d'intérêt (40) est configurée pour extraire la zone d'intérêt à partir de l'image en vue de dessus générée par l'unité de calcul (30).

6. Dispositif pour un véhicule selon la revendication 5, dans lequel l'unité de décision de zone d'intérêt (40) est configurée pour filtrer des objets détectés par le premier capteur embarqué (10) qui sont situés à l'intérieur de la zone d'intérêt selon les principes de l'Intersection over Union.

7. Dispositif pour un véhicule selon l'une au moins des revendications précédentes, dans lequel
l'unité de décision de zone d'intérêt (40) est configurée pour adapter la zone d'intérêt à la vitesse du véhicule.

8. Dispositif pour un véhicule selon l'une au moins des revendications précédentes, dans lequel
l'unité de décision de zone d'intérêt (40) est en outre configurée pour suivre des objets qui n'ont pas été filtrés parmi la zone intérêt et pour effectuer un processus de prédiction de position pour lesdits objets.

9. Dispositif pour un véhicule selon l'une au moins des revendications précédentes, dans lequel
les objets suivis par l'unité de décision de zone d'intérêt (40) qui sont situés à l'intérieur de la zone d'intérêt sont sélectionnés sur la base d'un seuil de chevauchement de leur Intersection over Union.

10. Dispositif pour un véhicule selon l'une au moins des revendications précédentes, dans lequel
les objets suivis par l'unité de décision de zone d'intérêt (40) qui sont situés à l'intérieur de la zone d'intérêt sont utilisés comme données d'entrée pour le modèle de prédiction d'action de conducteur.

11. Dispositif pour un véhicule selon l'une au moins des revendications précédentes, dans lequel
le modèle de prédiction d'action de conducteur est un modèle d'apprentissage automatique qui a été entraîné par la sortie du processus de prédiction de position de processus, de la forme et de la position de la zone intérêt et des ordres précédents du conducteur du véhicule.

12. Dispositif pour un véhicule selon la revendication 11, dans lequel la sortie du modèle de prédiction d'action de conducteur est utilisée comme entrée dans la détermination de la zone d'intérêt.

13. Système comprenant le dispositif selon l'une au moins des revendications précédentes et un véhicule.

14. Procédé de sortie d'un avertissement de collision à l'attention d'un conducteur d'un véhicule, incluant les étapes consistant à
- recevoir des images d'une zone à l'avant du véhicule à partir d'un capteur d'images ;
- détecter des obstacles dans les images par un deuxième capteur embarqué ;
- acquérir des données structurées du véhicule par un premier capteur embarqué ;
- générer une image sur la base d'une conversion de l'image en une représentation schématique comprenant les obstacles détectés ;
- extraire une zone d'intérêt à partir de l'image générée sur la base des données structurées du véhicule ;
- utiliser un modèle de prédiction d'action de conducteur pour prédire un événement futur possible sur la base de la zone d'intérêt extraite ; et
- sortir une recommandation d'action de conduite et/ou un avertissement pour un conducteur du véhicule ou une personne au voisinage du véhicule quand un événement prédéfini est prédit.

15. Produit de programme d'ordinateur configuré pour mettre en œuvre le procédé selon la revendication 14 quand il est exécuté sur un ordinateur.
